# EUROPEAN PATENT SPECIFICATION

(11) **EP 4 173 335 B1**
(45) Date of publication and mention of the grant of the patent: **26.06.2024**
(21) Application number: 21737786.0
(22) Date of filing: 28.06.2021
(51) Int. Cl.: H04W 12/08, H04W 8/20, H04W 48/18, H04W 60/00, H04W 48/02

(54) **AUTHENTICATION USING SLICE CAPABILITY INDICATION**
AUTHENTIFIZIERUNG MITTELS SLICE-FÄHIGKEITSANZEIGE
AUTHENTIFICATION À L'AIDE D'UNE INDICATION DE CAPACITÉ DE TRANCHE

(30) Priority: 26.06.2020 US 202063044942 P
(43) Date of publication of application: 03.05.2023
(73) Proprietor: Lenovo (Singapore) Pte. Ltd., New Tech Park 556741 (SG)
(72) Inventor: BASKARAN, Sheeba Backia Mary, 61381 Friedrichsdorf (DE); KUNZ, Andreas, 68526 Ladenburg (DE); VELEV, Genadi, 64291 Darmstadt (DE)
(74) Representative: Openshaw & Co.
(86) International application number: PCT/IB2021/055765
(87) International publication number: WO 2021/260669

(56) References cited:
- WO-A1-2019/185758
- LENOVO ET AL: "Solution to ensure system availability for indirect AMF reallocation", 3GPP DRAFT; S3-210534, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. e-meeting; 20210118 - 20210129 11 January 2021 (2021-01-11), XP051968488, Retrieved from the Internet: URL:https://ftp.3gpp.org/tsg_sa/WG3_Securi ty/TSGS3_102e/Docs/S3-210534.zip S3-210534_Solution to ensure system availability for indirect AMF reallocation.doc [retrieved on 2021-01-11]
- HUAWEI ET AL: "Adding evalution to solution #6 in TR 33.864", 3GPP DRAFT; S3-210962, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. e-meeting; 20210301 - 20210305 22 February 2021 (2021-02-22), XP051980354, Retrieved from the Internet: URL:https://ftp.3gpp.org/tsg_sa/WG3_Securi ty/SGS3_102Bis-e/Docs/S3-210962.zip S3-210962_AMFREAL_Evaluation to solution #6.doc [retrieved on 2021-02-22]
- "3rd Generation Partnership Project; Technical Specification Group Services and System Aspects; Study on the security of Access and Mobility Management Function (AMF) re-allocation; (Release 17)", 3GPP STANDARD; 3GPP TR 33.864, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. V0.3.0 1 February 2021 (2021-02-01), pages 1-38, XP051999426, Retrieved from the Internet: URL:https://ftp.3gpp.org/Specs/archive/33_ series/33.864/33864-030.zip S3-210620/S3-210620_TR33864-030-cl.docx [retrieved on 2021-02-01]

## Description

### CROSS-REFERENCE TO RELATED APPLICATIONS

This application claims priority to United States Provisional Patent Application Number 63/044,942 entitled "SLICE CAPABILITY BASED AMF REALLOCATION SECURITY CONTROL" and filed on June 26, 2020 for Sheeba Backia Mary Baskaran, Andreas Kunz and Genadi Velev.

### FIELD

The subject matter disclosed herein relates generally to wireless communications and more particularly relates to Access and Mobility Management Function ("AMF") reallocation-based User Equipment ("UE") Non-Access Stratum ("NAS") security handling in Fifth Generation ("5G") Systems.

### BACKGROUND

The 5G System ("5GS") supports a registration procedure with AMF reallocation when the initial AMF is unable to serve the UE due to UE's slice subscription information and slice related service requirements. In case of deployments with strict slice isolation, no N14 interface may be supported between initial AMF and target AMF (i.e., reallocated one) based on slice subscription. In the absence of N14 interface, the target AMF will not be able to fetch the NAS security context from the initial AMF to handle the UE's Registration Request.

International patent application WO2019/185758 is further prior art.

### BRIEF SUMMARY

The invention is defined by the appended claims. Claims 1, 9, 13 and 15 each define an apparatus. In the following, any method and/or apparatus referred to as embodiments but nevertheless do not fall within the scope of the appended claims are to be understood as examples helpful in understanding the invention.

Disclosed are procedures for security context control for AMF reallocation based on a slice capability indication. Said procedures may be implemented by apparatus, systems, methods, or computer program products.

One method of an Authentication Server Function ("AUSF") includes receiving a first authentication request message from a Security Anchor Function ("SEAF") that is co-located with an initial Access and Mobility Management Function ("AMF"). Here, the first authentication request message contains an AMF Slice Capabilities Information Element ("IE"). The method includes sending a data request message to a Unified Data Management function ("UDM") and receiving a data response message from the UDM. Here, the data request message contains the received AMF Slice Capabilities IE and the data response message contains a Slice compatibility indicator. The method includes determining not to send a SEAF key to the SEAF in response to the Slice Compatibility indicator indicating that an AMF slice is not compatible with registration of a UE and sending an authentication response message to the SEAF. Here, the authentication response message includes an Authentication Result, a User Subscription Identifier, and the Slice Compatibility indicator.

One method of an initial AMF having a co-located SEAF includes sending an authentication request message to an AUSF. Here, the authentication request message contains an AMF Slice Capabilities IE. The method includes receiving an authentication response message from the AUSF. Here, the authentication response message comprising: a Slice compatibility indicator, AMF Authentication Information, and an authentication result. The method includes determining that an AMF slice is not compatible with registration of a UE, said determination based on the received Slice compatibility indicator. The method includes initiating an AMF reallocation procedure of the UE to a Target AMF in response to determining that an AMF slice is not compatible with the UE's registration and sending a Reroute NAS message to a RAN node. Here, the reroute NAS message comprising the Slice compatibility indication.

One method of a UDM includes receiving a first data request message from an AUSF, where the first data request message contains at least a User Subscription identifier and an AMF Slice Capabilities IE. The method includes performing a Slice compatibility check based on the received AMF Slice Capabilities IE and further based on Slice Subscription Data associated with the User Subscription Identifier. The method includes sending a data response message to the AUSF, the data response message comprising a Slice compatibility indicator.

One method of a target AMF having a co-located SEAF includes receiving a Reroute NAS message from a RAN node, the Reroute NAS message comprising a Slice compatibility indicator and an Authentication Token. Here, the Slice compatibility indicator is set to a value that indicates that an initial AMF is not compatible with a UE registration. The method includes sending an authentication request message - via the co-located SEAF - to an AUSF. Here, the second authentication message contains the Authentication Token. The method includes receiving an authentication response message from the AUSF via the SEAF. Here, the authentication response message contains an AMF key and a SUPI of the UE.

One method of a Common SEAF ("CSEAF"), also known as a Security Management Function ("SEMF") or Security Control Function ("SECF"), includes sending a first authentication response message to an initial SEAF co-located with an initial AMF, the authentication response message comprising a User Subscription Identifier, a SEAF key and a Slice compatibility indicator. The method includes deriving a first Authentication Token in response to the Slice compatibility indicator indicating that an AMF slice is not compatible with a UE registration. The method includes receiving a second authentication request message from a Target SEAF co-located with a Target AMF. Here, the second authentication request message includes a second Authentication Token and a KSI, where inclusion of the KSI indicates that a primary authentication of the UE has been completed successfully. The fifth method includes verifying that the second Authentication Token matches the first Authentication Token and sending a second authentication response message to the Target AMF, the authentication response message containing an AMF key.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for security context control for AMF reallocation based on a slice capability indication;
Figure 2 is a block diagram illustrating one embodiment of a Fifth-Generation ("5G") New Radio ("NR") protocol stack;
Figure 3A depicts a signal flow diagram illustrating one embodiment of AMF slice capability verification and UE authentication through reallocated AMF;
Figure 3B is a continuation of the signal flow diagram of Figure 3A;
Figure 4A depicts a signal flow diagram illustrating one embodiment of AMF slice capability verification and Security provision for reallocated AMF;
Figure 4B is a continuation of the signal flow diagram of Figure 4A;
Figures 5A depicts a signal flow diagram illustrating one embodiment of AMF slice capability verification and Security provision for reallocated AMF with CSEAF;
Figure 5B is a continuation of the signal flow diagram of Figure 5A;
Figures 6A depicts a signal flow diagram illustrating one embodiment of AMF slice capability verification and UE authentication through reallocated AMF;
Figure 6B is a continuation of the signal flow diagram of Figure 5A;
Figure 7 is a diagram illustrating one embodiment of a user equipment apparatus that may be used for security context control for AMF reallocation based on a slice capability indication;
Figure 8 is a diagram illustrating one embodiment of a network apparatus that may be used for security context control for AMF reallocation based on a slice capability indication; and
Figure 9 is a flowchart diagram illustrating one embodiment of a first method security context control for AMF reallocation based on a slice capability indication;
Figure 10 is a flowchart diagram illustrating one embodiment of a second method security context control for AMF reallocation based on a slice capability indication;
Figure 11 is a flowchart diagram illustrating one embodiment of a third method security context control for AMF reallocation based on a slice capability indication;
Figure 12 is a flowchart diagram illustrating one embodiment of a fourth method security context control for AMF reallocation based on a slice capability indication; and
Figure 13 is a flowchart diagram illustrating one embodiment of a fifth method security context control for AMF reallocation based on a slice capability indication.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects.

For example, the disclosed embodiments may be implemented as a hardware circuit comprising custom very-large-scale integration ("VLSI") circuits or gate arrays, off-the-shelf semiconductors such as logic chips, transistors, or other discrete components. The disclosed embodiments may also be implemented in programmable hardware devices such as field programmable gate arrays, programmable array logic, programmable logic devices, or the like. As another example, the disclosed embodiments may include one or more physical or logical blocks of executable code which may, for instance, be organized as an object, procedure, or function.

Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, or device.

Code for carrying out operations for embodiments may be any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN"), wireless LAN ("WLAN"), or a wide area network ("WAN"), or the connection may be made to an external computer (for example, through the Internet using an Internet Service Provider ("ISP")).

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C. As used herein, "a member selected from the group consisting of A, B, and C and combinations thereof' includes only A, only B, only C, a combination of A and B, a combination of B and C, a combination of A and C or a combination of A, B and C.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart diagrams and/or block diagrams.

The code may also be stored in a storage device that can direct a computer, other programmable data processing apparatus, or other devices to function in a particular manner, such that the instructions stored in the storage device produce an article of manufacture including instructions which implement the function/act specified in the flowchart diagrams and/or block diagrams.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart diagrams and/or block diagrams.

The flowchart diagrams and/or block diagrams in the Figures illustrate the architecture, functionality, and operation of possible implementations of apparatuses, systems, methods, and program products according to various embodiments. In this regard, each block in the flowchart diagrams and/or block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

Generally, the present disclosure describes systems, methods, and apparatus by which AMF reallocation-based NAS security (due to no N14 interface support between initial AMF and Target AMF in case of strict slice isolation requirements) can be handled in the 5GS. In certain embodiments, the methods may be performed using computer code embedded on a computer-readable medium. In certain embodiments, an apparatus or system may include a computer-readable medium containing computer-readable code which, when executed by a processor, causes the apparatus or system to perform at least a portion of the below described solutions.

In Third-Generation Partnership Project ("3GPP"), the 5G System ("5GS") supports a registration procedure with AMF reallocation when the initial AMF is unable to serve the UE, e.g., due to UE's slice subscription information and slice related service requirements. However, in case of deployments with strict slice isolation, the initial AMF and target AMF may be in different security domains, such that no N14 interface may be supported between Initial AMF and Target AMF. Note that strict slice isolation may be implemented for vertical service requirements to prevent one slice from interacting with other slices. The strict slice isolation also prevents NAS security contexts from being shared between network slices.

In the absence of N14 interface, the Initial AMF sends the UE's registration message to the Target AMF via the RAN using a reroute procedure. However, current reroute procedure does not allow the Target AMF to fetch the security context (e.g., NAS security context) from the Initial AMF to handle the UE's Registration Request. This inability to fetch the security context retrieval impacts the two following scenarios.

Scenario 1 - Initial Registration procedure: During initial registration, without improved security context handling, the Target AMF would be unable to handle the received rerouted NAS message (i.e., Initial UE message or Registration Request) because the rerouted NAS message would not contain any NAS security context (as it is routed via RAN) and the Target AMF also will not have access to the UE's security context nor subscription profile due to lack of connectivity to the Initial AMF (i.e., a source AMF). Thus, AMF reallocation without N14 interface would fail in Scenario 1 (i.e., will lead to Registration failure).

Scenario 2 - Mobility Registration Update: Once the UE is registered and established security with Source AMF (e.g., the Initial AMF), on UE's mobility to a different area, the UE sends the Registration Request of type `mobility registration update' to the Target AMF, where the Target AMF - in the absence of N14 interface - would be unable to fetch the UE security context (e.g., NAS security context) from the Source AMF (e.g., Initial AMF). Accordingly, the Target AMF would be unable to process the received 'Registration Request' message which is both integrity and confidentiality protected. The Target AMF performs primary authentication (and NAS security set up with UE) and based on local policy and subscription, if it determines to perform AMF reallocation and reroute via RAN and if it sends the Registration Request/initial UE message to the new Target AMF via RAN, then, AMF reallocation without N14 interface would fail in Scenario 2.

As defined in 3GPP TS 33.501, Clause 6.46, "Protection of Initial NAS message" the initial NAS message is the first NAS message that is sent after the UE transitions from the idle state. Here, the UE is to send a limited set of IEs (called the cleartext IEs) including those needed to establish security in the initial message when it has no NAS security context.

However, the UE has a NAS security context, the UE shall send a message that has the complete initial NAS message ciphered in a NAS Container along with the cleartext IEs with whole message integrity protected. The complete initial message is included in the NAS Security Mode Complete message in a NAS Container when needed (e.g., AMF cannot find the used security context) in the latter case and always in the former case. In certain embodiments, the cleartext IEs, includes subscription identifiers (e.g., SUCI or GUTIs), UE security capabilities, New Generation Key Set Identifier ("ngKSI"), indication that the UE is moving from EPC, Additional GUTI, and IE containing the TAU Request in the case idle mobility from LTE."

Therefore, unless the target AMF (i.e., Reallocated AMF) has access to the UE security context, the target AMF cannot handle the Registration Request in either case described. So far, there is no security solution available in the SA3 technical specification (3GPP TS) or technical report (TR) for the UE NAS security context transfer to Target AMF to support scenarios (i) AMF reallocation during registration and (ii) registration mobility update, in the absence of N14 interface.

To remedy the above mentioned problems with UE security context handling during AMF reallocation, the present disclosure describes techniques for performing the primary authentication for a UE by the network after determining the AMF Slice compatibility (i.e., checking whether an AMF is compatible or not) based on the AMF slice capabilities provided by the AMF and UE Slice Subscription data available in the UDM, thereby controlling the UE security context provisioning to the right AMF that can serve the UE according to its slice subscription information (i.e., an AMF that is slice compatible and capable to serve a UE's service request). The AUSF can thereby handle the primary authentication and provide the authentication vector and/or security context to either the Initial AMF or Target AMF during the AMF reallocation followed by the AMF incompatibility determination by the UDM (and indication to the initial AMF).

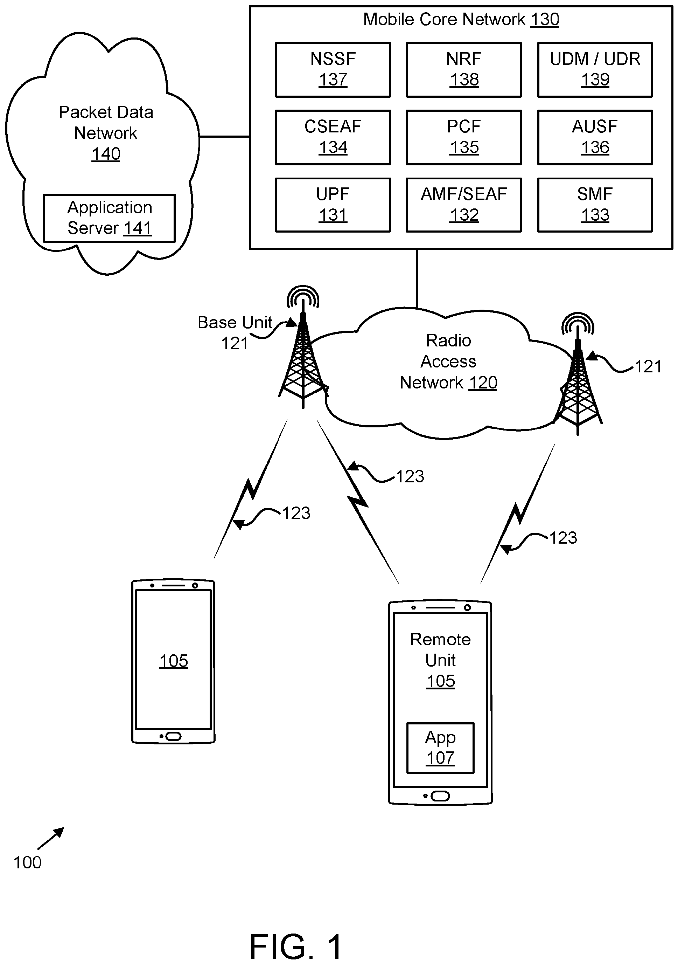

Figure 1 depicts a wireless communication system 100 for security context control for AMF reallocation based on a slice capability indication, according to embodiments of the disclosure. In one embodiment, the wireless communication system 100 includes at least one remote unit 105, a radio access network ("RAN") 120, and a mobile core network 130. The RAN 120 and the mobile core network 130 form a mobile communication network. The RAN 120 may be composed of a base unit 121 with which the remote unit 105 communicates using wireless communication links 123. Even though a specific number of remote units 105, base units 121, wireless communication links 123, RANs 120, and mobile core networks 130 are depicted in Figure 1, one of skill in the art will recognize that any number of remote units 105, base units 121, wireless communication links 123, RANs 120, and mobile core networks 130 may be included in the wireless communication system 100.

In one implementation, the RAN 120 is compliant with the 5G system specified in the Third Generation Partnership Project ("3GPP") specifications. For example, the RAN 120 may be a NG-RAN, implementing NR RAT and/or LTE RAT. In another example, the RAN 120 may include non-3GPP RAT (e.g., Wi-Fi^{®} or Institute of Electrical and Electronics Engineers ("IEEE") 802.11-family compliant WLAN). In another implementation, the RAN 120 is compliant with the LTE system specified in the 3GPP specifications. More generally, however, the wireless communication system 100 may implement some other open or proprietary communication network, for example Worldwide Interoperability for Microwave Access ("WiMAX") or IEEE 802.16-family standards, among other networks. The present disclosure is not intended to be limited to the implementation of any particular wireless communication system architecture or protocol.

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like. Moreover, the remote units 105 may be referred to as the UEs, subscriber units, mobiles, mobile stations, users, access terminals, mobile terminals, fixed terminals, subscriber stations, user terminals, wireless transmit/receive unit ("WTRU"), a device, or by other terminology used in the art. In various embodiments, the remote unit 105 includes a subscriber identity and/or identification module ("SIM") and the mobile equipment ("ME") providing mobile termination functions (e.g., radio transmission, handover, speech encoding and decoding, error detection and correction, signaling and access to the SIM). In certain embodiments, the remote unit 105 may include a terminal equipment ("TE") and/or be embedded in an appliance or device (e.g., a computing device, as described above).

The remote units 105 may communicate directly with one or more of the base units 121 in the RAN 120 via uplink ("UL") and downlink ("DL") communication signals. Furthermore, the UL and DL communication signals may be carried over the wireless communication links 123. Here, the RAN 120 is an intermediate network that provides the remote units 105 with access to the mobile core network 130. As described in greater detail below, the RAN 120 may send a measurement and reporting configuration 111 to the remote unit 105, wherein the remote unit 105 sends a measurement report 113 to the RAN 120.

In some embodiments, the remote units 105 communicate with an application server 141 via a network connection with the mobile core network 130. For example, an application 107 (e.g., web browser, media client, telephone and/or Voice-over-Internet-Protocol ("VoIP") application) in a remote unit 105 may trigger the remote unit 105 to establish a protocol data unit ("PDU") session (or other data connection) with the mobile core network 130 via the RAN 120. The mobile core network 130 then relays traffic between the remote unit 105 and the application server 141 in the packet data network 140 using the PDU session. The PDU session represents a logical connection between the remote unit 105 and the User Plane Function ("UPF") 131.

In order to establish the PDU session (or PDN connection), the remote unit 105 must be registered with the mobile core network 130 (also referred to as "attached to the mobile core network" in the context of a Fourth Generation ("4G") system). Note that the remote unit 105 may establish one or more PDU sessions (or other data connections) with the mobile core network 130. As such, the remote unit 105 may have at least one PDU session for communicating with the packet data network 140. The remote unit 105 may establish additional PDU sessions for communicating with other data networks and/or other communication peers.

In the context of a 5G system ("5GS"), the term "PDU Session" refers to a data connection that provides end-to-end ("E2E") user plane ("UP") connectivity between the remote unit 105 and a specific Data Network ("DN") through the UPF 131. A PDU Session supports one or more Quality of Service ("QoS") Flows. In certain embodiments, there may be a one-to-one mapping between a QoS Flow and a QoS profile, such that all packets belonging to a specific QoS Flow have the same 5G QoS Identifier ("5QI").

In the context of a 4G/LTE system, such as the Evolved Packet System ("EPS"), a Packet Data Network ("PDN") connection (also referred to as EPS session) provides E2E UP connectivity between the remote unit and a PDN. The PDN connectivity procedure establishes an EPS Bearer, i.e., a tunnel between the remote unit 105 and a Packet Gateway ("PGW", not shown) in the mobile core network 130. In certain embodiments, there is a one-to-one mapping between an EPS Bearer and a QoS profile, such that all packets belonging to a specific EPS Bearer have the same QoS Class Identifier ("QCI").

The base units 121 may be distributed over a geographic region. In certain embodiments, a base unit 121 may also be referred to as an access terminal, an access point, a base, a base station, a Node-B ("NB"), an Evolved Node B (abbreviated as eNodeB or "eNB," also known as Evolved Universal Terrestrial Radio Access Network ("E-UTRAN") Node B), a 5G/NR Node B ("gNB"), a Home Node-B, a relay node, a RAN node, or by any other terminology used in the art. The base units 121 are generally part of a RAN, such as the RAN 120, that may include one or more controllers communicably coupled to one or more corresponding base units 121. These and other elements of radio access network are not illustrated but are well known generally by those having ordinary skill in the art. The base units 121 connect to the mobile core network 130 via the RAN 120.

The base units 121 may serve a number of remote units 105 within a serving area, for example, a cell or a cell sector, via a wireless communication link 123. The base units 121 may communicate directly with one or more of the remote units 105 via communication signals. Generally, the base units 121 transmit DL communication signals to serve the remote units 105 in the time, frequency, and/or spatial domain. Furthermore, the DL communication signals may be carried over the wireless communication links 123. The wireless communication links 123 may be any suitable carrier in licensed or unlicensed radio spectrum. The wireless communication links 123 facilitate communication between one or more of the remote units 105 and/or one or more of the base units 121. Note that during NR-U operation, the base unit 121 and the remote unit 105 communicate over unlicensed radio spectrum.

In one embodiment, the mobile core network 130 is a Fifth-Generation Core network ("5GC") or an Evolved Packet Core network ("EPC"), which may be coupled to a packet data network 140, like the Internet and private data networks, among other data networks. A remote unit 105 may have a subscription or other account with the mobile core network 130. In various embodiments, each mobile core network 130 belongs to a single mobile network operator ("MNO"). The present disclosure is not intended to be limited to the implementation of any particular wireless communication system architecture or protocol.

The mobile core network 130 includes several network functions ("NFs"). As depicted, the mobile core network 130 includes at least one UPF 131. The mobile core network 130 also includes multiple control plane ("CP") functions including, but not limited to, an Access and Mobility Management Function ("AMF") 132 that serves the 5G-RAN 115, a Session Management Function ("SMF") 133, a Policy Control Function ("PCF") 135, an Authentication Server Function ("AUSF") 136, a Network Slice Selection Function ("NSSF") 137, a Network Repository Function ("NRF") 138, a Unified Data Management function ("UDM") and a User Data Repository ("UDR"). The depicted mobile core network includes a Common Security Anchor Function ("CSEAF") 134; however, in other embodiments the CSEAF is omitted as a discrete NF and its security functionality implemented by another NF in the mobile core network 140, such as the AUSF 136, the NSSF 137, or the NRF 138.

The UPF(s) 141 is/are responsible for packet routing and forwarding, packet inspection, QoS handling, and external PDU session for interconnecting Data Network ("DN"), in the 5G architecture. The AMF 132 is responsible for termination of Non-Access Stratum ("NAS") signaling, NAS ciphering & integrity protection, registration management, connection management, mobility management, access authentication and authorization, security context management. While Figure 1 shows a single AMF 132, in other embodiments the mobile core network 130 may include multiple AMFs 132. The SMF 133 is responsible for session management (i.e., session establishment, modification, release), remote unit (i.e., UE) Internet Protocol ("IP") address allocation & management, DL data notification, and traffic steering configuration of the UPF 131 for proper traffic routing.

The PCF 135 is responsible for unified policy framework, providing policy rules to CP functions, access subscription information for policy decisions in UDR. The AUSF 136 acts as an authentication server and allows the AMF 132 to authenticate the remote unit 105.

The NSSF 137 is responsible for selecting of the Network Slice instances to serve the remote unit 105, for determining the allowed network slice selection assistance information ("NSSAI"), and for determining the set of AMF(s) 132 to be used to serve the remote unit 105. Here, "NSSAI" refers to a vector value including one or more S-NSSAI values. The NRF 138 provides NF service registration and discovery, enabling NFs to identify appropriate services in one another and communicate with each other over Application Programming Interfaces ("APIs").

The UDM is responsible for generation of Authentication and Key Agreement ("AKA") credentials, user identification handling, access authorization, subscription management. The UDR is a repository of subscriber information and can be used to service a number of network functions. For example, the UDR may store subscription data, policy-related data, subscriber-related data that is permitted to be exposed to third party applications, and the like. In some embodiments, the UDM is co-located with the UDR, depicted as combined entity "UDM/UDR" 139.

In various embodiments, the mobile core network 130 may also include a Network Exposure Function ("NEF") (which is responsible for making network data and resources easily accessible to customers and network partners), an Application Function ("AF") (which supports application influence on traffic routing, accessing NEF, interaction with policy framework for policy control, or other NFs defined for the 5GC. In certain embodiments, the mobile core network 130 may include an authentication, authorization, and accounting ("AAA") server.

In various embodiments, the each of the mobile core network 130 supports different types of mobile data connections and different types of network slices, wherein each mobile data connection utilizes a specific network slice. Here, a "network slice" refers to a portion of a core network optimized for a certain traffic type or communication service. A network slice instance may be identified by a single-network slice selection assistance information ("S-NSSAI") while a set of network slices for which the remote unit 105 is authorized to use may be identified by NSSAI. In certain embodiments, the various network slices may include separate instances of network functions, such as the SMF 133 and UPF 131. In some embodiments, the different network slices may share some common network functions, such as the AMF 132. The different network slices are not shown in Figure 1 for ease of illustration, but their support is assumed.

Although specific numbers and types of network functions are depicted in Figure 1, one of skill in the art will recognize that any number and type of network functions may be included in the mobile core network 130. Moreover, in an LTE variant where the mobile core network 130 is an EPC, the depicted network functions may be replaced with appropriate EPC entities, such as a Mobility Management Entity ("MME"), a Serving Gateway ("SGW"), a PGW, a Home Subscriber Server ("HSS"), and the like. For example, the AMF 132 may be mapped to an MME, the SMF 133 may be mapped to a control plane portion of a PGW and/or to an MME, the UPF 131 may be mapped to an SGW and a user plane portion of the PGW, the UDM/UDR 139 may be mapped to an HSS, etc.

While Figure 1 depicts components of a 5G RAN and a 5G core network, the described embodiments for security context control for AMF reallocation based on a slice capability indication apply to other types of communication networks and RATs, including IEEE 802.11 variants, Global System for Mobile Communications ("GSM", i.e., a 2G digital cellular network), General Packet Radio Service ("GPRS"), Universal Mobile Telecommunications System ("UMTS"), LTE variants, CDMA 2000, Bluetooth, ZigBee, Sigfox, and the like.

In the following descriptions, the term "RAN node" is used for the base station but it is replaceable by any other radio access node, e.g., gNB, eNB, Base Station ("BS"), Access Point ("AP"), etc. The term UE is used for the user equipment, but it is replaceable by any other radio access node, e.g., mobile terminal ("MT"), access terminal ("AT"), WTRU, IAB node, etc. Further, the operations are described mainly in the context of 5G NR. However, the described solutions/methods are also equally applicable to other mobile communication systems security context control for AMF reallocation based on a slice capability indication.

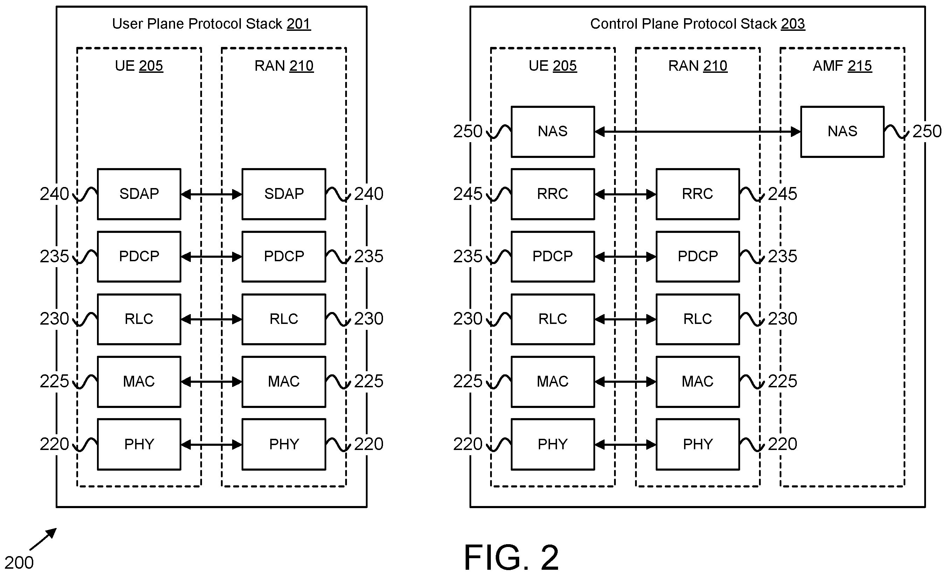

Figure 2 depicts a NR protocol stack 200, according to embodiments of the disclosure. While Figure 2 shows the UE 205, the RAN 210 and an AMF 215 in a 5G core network ("5GC"), these are representative of a set of remote units 105 interacting with a base unit 121 and a mobile core network 130. As depicted, the protocol stack 200 comprises a User Plane protocol stack 201 and a Control Plane protocol stack 203. The User Plane protocol stack 201 includes a physical ("PHY") layer 220, a Medium Access Control ("MAC") sublayer 225, the Radio Link Control ("RLC") sublayer 230, a Packet Data Convergence Protocol ("PDCP") sublayer 235, and Service Data Adaptation Protocol ("SDAP") layer 240. The Control Plane protocol stack 203 includes a physical layer 220, a MAC sublayer 225, a RLC sublayer 230, and a PDCP sublayer 235. The Control Plane protocol stack 203 also includes a Radio Resource Control ("RRC") layer 245 and a Non-Access Stratum ("NAS") layer 250.

The AS layer (also referred to as "AS protocol stack") for the User Plane protocol stack 201 consists of at least SDAP, PDCP, RLC and MAC sublayers, and the physical layer. The AS layer for the Control Plane protocol stack 203 consists of at least RRC, PDCP, RLC and MAC sublayers, and the physical layer. The Layer-2 ("L2") is split into the SDAP, PDCP, RLC and MAC sublayers. The Layer-3 ("L3") includes the RRC sublayer 245 and the NAS layer 250 for the control plane and includes, e.g., an Internet Protocol ("IP") layer and/or PDU Layer (not depicted) for the user plane. L1 and L2 are referred to as "lower layers," while L3 and above (e.g., transport layer, application layer) are referred to as "higher layers" or "upper layers."

The physical layer 220 offers transport channels to the MAC sublayer 225. The physical layer 220 may perform Clear Channel Assessment ("CCA") and/or Listen Before Talk ("LBT") procedure using energy detection thresholds, as described herein. In certain embodiments, the physical layer 220 may send a notification of UL LBT failure to a MAC entity at the MAC sublayer 225. The MAC sublayer 225 offers logical channels to the RLC sublayer 230. The RLC sublayer 230 offers RLC channels to the PDCP sublayer 235. The PDCP sublayer 235 offers radio bearers to the SDAP sublayer 240 and/or RRC layer 245. The SDAP sublayer 240 offers QoS flows to the core network (e.g., 5GC). The RRC layer 245 provides for the addition, modification, and release of Carrier Aggregation and/or Dual Connectivity. The RRC layer 245 also manages the establishment, configuration, maintenance, and release of Signaling Radio Bearers ("SRBs") and Data Radio Bearers ("DRBs").

The NAS layer 250 is between the UE 205 and the AMF 215. NAS messages are passed transparently through the RAN. The NAS layer 250 is used to manage the establishment of communication sessions and for maintaining continuous communications with the UE 205 as it moves between different cells of the RAN. In contrast, the AS layer is between the UE 205 and the RAN 210 (i.e., a RAN node, such as gNB) and carries information over the wireless portion of the network.

When the initial AMF 215 is unable to serve the UE 205, the NAS message received from the UE 205 is rerouted to another target AMF 215 either directly over the AMF-to-AMF interface (i.e., N14) or via RAN 210. Current 3GPP specification only define reroute via RAN during initial registration. Once the UE has registered and established security with the network, only afterwards the direct reroute is possible. The reason for this is that the current security mechanisms specified in 3GPP TS 33.501 rely heavily on the assumption that AMFs can communicate directly.

The dependency on this assumption goes to the extent that the security specifications prohibit the UE 205 from accepting unprotected messages from the core once security has been established. Therefore, while a registered UE 205 is moving from an area to the other, it is assumed that the Target AMF 215 is always able to retrieve the security context from an old AMF (i.e., Source AMF 215) that used to serve the UE 205. In case a reroute via RAN 210 takes place, and the Target AMF 215 is unable to retrieve the UE security context, then the Target AMF 215 is not able to trigger a new authentication procedure in order to establish a new security context. In fact, the Target AMF 215 would not be able to communicate with the UE 205 in the first place since all the unprotected downlink messages will be dismissed by the UE 205.

To enable deployment scenarios with stricter slice isolation requirements on the core network, for example where the AMFs 215 are unable to communicate with each other, the network supports the indirect reroute procedure for registration of UEs 205.

Therefore, for deployments that require strict slice isolation, no N14 interface may be supported and so direct reroute and retrieval of UE NAS security context is not possible using conventional mechanisms. In case of RAN rerouting to support slice isolation, the NAS message alone is rerouted and the UE NAS security context cannot be rerouted via RAN from the Initial AMF to Target AMF considering the security of NAS security context.

To support both strict slice isolation and AMF reallocation, the Common NF (i.e., AUSF, CSEAF, etc.) acts as the UE security context storage and control function managing the security context at the serving network (or a home network) which is provided (or generated) by the home network after a successful authentication. The Common NF controls the security context provision to other NFs such as AMFs, co-located SEAFs, etc. by ensuring the network slice security requirements such as slice security isolation and slice service data privacy).

The solutions described below carry out the primary authentication for a UE by the network after determining the AMF Slice compatibility (check if an AMF is compatible or not) based on the AMF slice capabilities provided by the AMF and UE Slice Subscription data available in the UDM to control the UE security context provisioning to the right AMF (slice compatible and capable to serve a UE's service request) that can serve the UE according to its slice subscription information. The AUSF can there by handle the primary authentication and provide the authentication vector and security context to either the Initial AMF/SEAF or Target AMF/SEAF during the AMF reallocation followed by the AMF compatibility or incompatibility determination by the UDM (and indication to the initial AMF). As used herein, the notation "AMF/SEAF" refers to an AMF having a co-located SEAF.

According to embodiments of a first solution, a new information element ("IE") is introduced called "AMF Slice Capabilities" or, alternatively "AMF Slice Capability." This IE may contain one or more slice information such as S-NSSAIs or any slice/service information. The new IE (AMF Slice Capabilities) may be provided by the Initial AMF to an Authentication credential Repository and Processing Function ("ARPF") co-located with UDM via AUSF during UE authentication.

The AMF-provided slice capability information allows the 5G core network (i.e., the UDM) to verify the slice compatibility of the initial AMF. Using the UE slice subscription data/information available in the UDM/UDR, the core network determines whether an initial AMF is able to serve the UE. If the UDM/UDR finds the initial AMF as slice incompatible NF to serve the UE, then the UDM/UDR can send a slice incompatibility indication to initial AMF rather than sending an authentication challenge. The slice incompatibility indication triggers the initial AMF to initiate AMF reallocation and UE can be authenticated via a reallocated (i.e., Target) AMF.

This described methodology of performing an authentication with reallocated AMF can address the shortcomings of existing approaches where the UE security context is shared with incompatible initial AMF and, once an AMF is reallocated due to slice isolation requirements and due to absence ofN14 interface, there arises an issue of inability to share the UE security context among the initial (i.e., source) AMF and target AMF, finally leading to service failure.

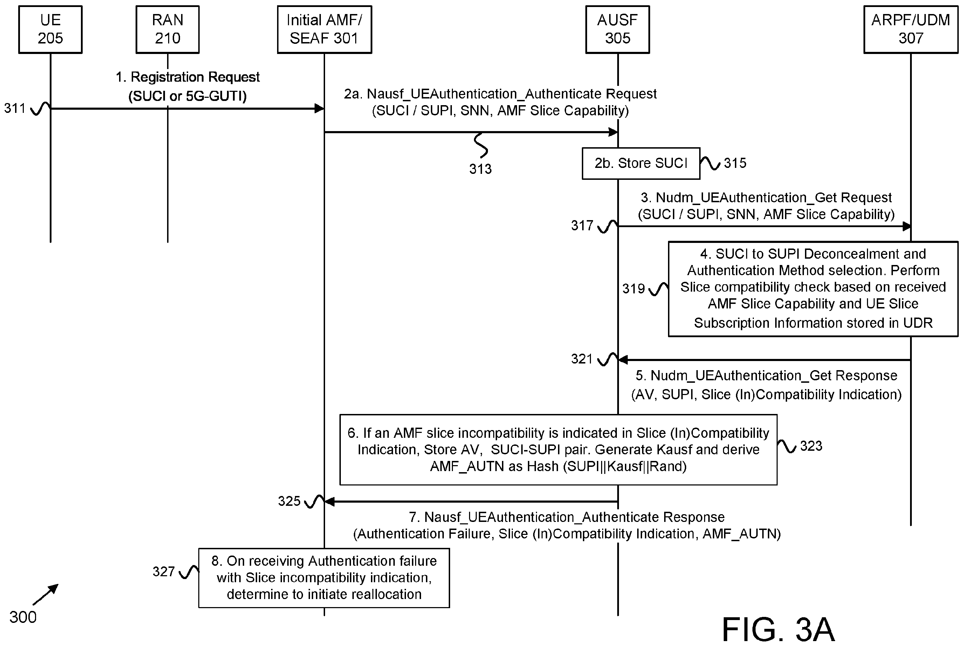

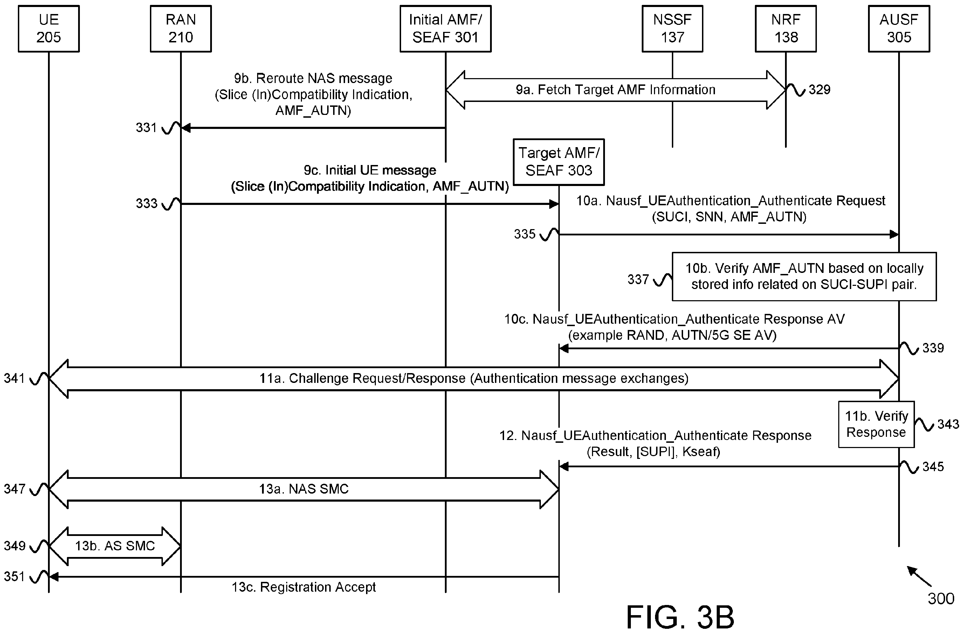

Figures 3A and 3B depict signaling flow of a procedure 300 illustrating one embodiment of UE authentication based the determined slice compatibility of the initial AMF, according to the first solution for AMF reallocation security control. The signaling flow illustrates AMF slice capability verification and UE authentication through reallocated AMF. The procedure 300 involves the UE 205, the RAN 210, an Initial AMF with co-located SEAF (depicted as combined entity "Initial AMF/SEAF" 301), a Target AMF with co-located SEAF (depicted as combined entity "Target AMF/SEAF" 303), an AUSF 305, and an ARPF co-located with UDM (depicted as combined entity "ARPF/UDM" 307). As used herein, the notation "ARPF/UDM" refers to an ARPF and co-located UDM. Here, the Initial AMF/SEAF 301 and the Target AMF/SEAF 303 may be implementations of AMF 132, the AUSF 305 may be an implementation of the AUSF 136, and the ARPF/UDM 307 may be an implementation of the UDM/UDR 139.

At Step 1, the UE 205 sends the Registration Request with SUCI or 5G-GUTI to the initial AMF (see messaging 311).

At Step 2a, the Initial AMF 301 forwards the received initial UE message containing Registration Request to the co-located SEAF and includes the AMF Slice Capabilities information element ("IE"). The Initial SEAF 301 further invoke the Nausf_UEAuthentication service by sending a Nausf_UEAuthentication_Authenticate Request message to the AUSF 305 (see messaging 313). As depicted, the Nausf_UEAuthentication_Authenticate Request message may contain the following parameters: User Subscription ID (i.e., SUCI or SUPI), Serving Network Name ("SNN"), and AMF Slice Capabilities (i.e., the new IE discussed above).

At Step 2b, the AUSF 305 verifies that the requesting initial SEAF 301 in the serving network is entitled to use the SNN in the Nausf_UEAuthentication_Authenticate Request by comparing the SNN with the expected serving network name. The AUSF 305 temporarily stores the received SNN and the User Subscription ID (i.e., SUCI or SUPI) in its local memory (see block 315).

At Step 3, the AUSF 305 sends to the ARPF/UDM 307 a Nudm_UEAuthentication_Get Request (see messaging 317). As depicted, the Nudm_UEAuthentication_Get Request message may contain the following parameters: User Subscription ID (i.e., SUCI or SUPI), SNN, and AMF Slice Capabilities IE. Note that the new IE "AMF Slice Capabilities" may indicate one or more slice(s) or service information (example S-NSSAIs) supported by the Initial AMF/SEAF 301.

At Step 4, upon reception of the Nudm_UEAuthentication_Get Request, the ARPF/UDM 307 invokes a Subscription Identifier De-concealing Function ("SIDF") to de-conceal the SUCI into SUPI (i.e., when a SUCI is received) and selects an Authentication Method (see block 319). Further, in response to AMF Slice Capabilities information received, the ARPF/UDM 307 fetches the SUPI related UE Slice subscription Information from the UDR and determines whether the Initial AMF/SEAF 301 is capable of serving the specific UE 205, e.g., based on AMF's network slice capability and the UE's slice subscription data. Based on the ARPF/UDM 307 determination of AMF slice compatibility to serve UE, any one of the following cases will be carried out:
Case 1 - The AMF Slice is compatible with UE Slice Subscription data. Here, if the ARPF/UDM 307 determines that the initial AMF/SEAF 301 selected by the RAN 210 is capable of serving a UE based on its Slice Subscription data and the received AMF Slice capability, then ARPF/UDM 307 determines that the initial AMF's slice is `slice compatible' and a Slice Compatibility indication is sent by the ARPF/UDM 307 to the AUSF 305 in Nudm_UEAuthentication_Get Response and the primary authentication is run between the UE and the 5G network similar to the existing system as specified in 3GPP TS 33.501. Here, the value of the Slice Compatibility indication shows that the AMF Slice is compatible with UE Slice Subscription data.
Case 2 - The AMF Slice is not compatible (incompatible) with UE Slice Subscription data. Here, if the ARPF/UDM 307 determines that the initial AMF/SEAF 301 selected by the RAN 210 is not capable of serving the UE 205 based on the UE's Slice Subscription data and the received AMF Slice capability, then ARPF/UDM 307 determines that the initial AMF/SEAF 301 is `slice incompatible' and a Slice (In)Compatibility indication is sent by the ARPF/UDM 307 to the AUSF 305 in Nudm_UEAuthentication_Get Response. As used herein, the notation "Slice (In)Compatibility" is used to indicate that a Slice Compatibility indication is present and that the value of the indication shows that the AMF Slice is not compatible (incompatible) with UE Slice Subscription data.

In the depicted embodiments, it is assumed that Case 2 applies and the Initial AMF/SEAF 301's network slice is considered incompatible for the UE 205's service, therefore the AMF reallocation is triggered and the following steps 5-13c will be executed.

At Step 5, the ARPF/UDM 307 sends a Nudm_UEAuthentication_Get Response in reply to the Nudm_UEAuthentication_Get Request to the AUSF 305, where the Nudm_UEAuthentication_Get Response contains the AV, SUPI and Slice Compatibility Indicator IE with Slice incompatible indication (see messaging 321). The Slice Compatibility Indication can be a single bit indicator where, for example, a '0' indicates that the AMF Slice is incompatible for the UE's slice subscription and a '1' indicates that the AMF Slice is compatible for the UE's slice subscription.

Alternatively, based on the operator's implementation, the Slice Compatibility Indication sent by the ARPF/UDM 307 to the AUSF 305 can be in any format to indicate the AMF Slice compatibility or incompatibility towards a UE service and UE slice subscription data accordingly.

At Step 6, if an AMF slice incompatibility is indicated by the ARPF/UDM 307 in the Slice Compatibility Indicator in the Nudm_UEAuthentication_Get Response message, then the AUSF 305 stores the UE authentication information such as Authentication Vector ("AV"), the authentication method indicated by the ARPF/UDM 307, and the SUCI-SUPI pair based on the SUPI received (see block 323). Examples of the AV include, but are not limited to, 5G Home Environment ("HE") AV, Extensible Authentication Protocol Authentication Key Agreement Prime ("EAP-AKA"') AV, or another AV.

Additionally, the AUSF 305 generates the AUSF key (i.e., Kausf) and derives a reallocated AMF authentication token AMF_AUTN (to indicate that an AV for the UE's primary authentication has been generated and available in the AUSF 305 to perform the primary authentication). The AMF_AUTN can be derived using any one of the following options and the AUSF 305 locally stores the Kausf key and the AMF_AUTN along with the UE authentication information in its local memory.

Three options are described herein for AMF_AUTN derivation:
- Option 1: AMF_AUTN = Hash (Kausf∥SUPI∥Rand used in AV), where the AUSF 305 derives the Kseaf and provides the Kseaf to SEAF co-located in the Target AMF after successful AMF reallocation. As used herein, the symbol '||' indicates concatenation of the values. Further, the notation "Hash (A||B)" indicates that a hash function is performed on the concatenated string "A||B".
- Option 2: AMF_AUTN = Hash (Kseaf∥SUPI∥Rand used in AV), where the AUSF 305 derives the Kseaf and provides the Kseaf to SEAF co-located in the Target AMF after successful AMF reallocation.
- Option 3: AMF_AUTN = Hash (Kamf∥SUPI∥Rand used in AV), where the AUSF 305 derives the Kseaf and the Kamf to provide the Kamf to the Target AMF after successful AMF reallocation.

At Step 7, the AUSF 305 sends to the Initial AMF/SEAF 301, the Nausf_UEAuthentication_Authenticate Response message containing SUCI/SUPI, an Authentication Failure Indication (or an Authentication Paused Indication) along with the Slice Incompatibility Indication and AMF_AUTN. Here, the Initial SEAF forwards the received SUCI and an Authentication Failure Indication (or an Authentication Paused Indication) along with the Slice Incompatibility Indication and AMF_AUTN to the co-located AMF.

At Step 8, the Initial AMF/SEAF 301 on receiving the SUCI, an Authentication Failure Indication (or an Authentication Paused Indication) along with the Slice Incompatibility Indication and AMF_AUTN, will understand that the initiated primary authentication procedure for the UE 205 with SUCI was failed (or paused) due to AMF's Slice incompatibility with the UE 205's Slice Requirements and Slice subscription data. Thus, the Initial AMF/SEAF 301 determines to initiate an AMF reallocation procedure based on the procedure specified in 3GPP TS 23.502 (e.g., AMF reallocation via RAN Reroute).

Note that even though the initial AMF/SEAF 301 receives an Authentication Failure or Authentication Paused indication from the core network (i.e., SEAF and/or AUSF 305), because it also receives the AMF's Slice incompatibility indication, in the first solution the initial AMF/SEAF 301 does not send anything about the authentication to the UE 205, but instead only will initiate the AMF reallocation.

Continuing on Figure 3B, at Step 9a fetches Target AMF ("T-AMF") information from the NSSF 137 and NRF 138, e.g., by performing steps 3a-6b (as applicable) as specified in clause 4.2.2.2.3 ("Registration with AMF re-allocation") of 3GPP TS 23.502 (see process 329).

At Step 9b, the Initial AMF/SEAF 301 further sends the Reroute NAS message to the RAN 210 (see messaging 331). Here, the Reroute RAN message contains the Initial UE message and in addition contains the Slice Incompatibility indication and AMF_AUTN.

At Step 9c, the RAN 210 forwards the received Reroute NAS message to the Target AMF/SEAF 303 (see messaging 333). The forwarded message contains the Initial UE message, the Slice Incompatibility indication and AMF_AUTN.

At Step 10a, the Target AMF/SEAF 303 on receiving the initial UE message (i.e., Reroute NAS message) containing the Slice Incompatibility indication and AMF_AUTN will understand that the due to slice incompatibility the initial message has been rerouted to it from a different AMF. Thus, the Target AMF/SEAF 303 does not includes its slice capabilities, considering that it has selected by the NSSF 137 based on its slice capability. The Target AMF/SEAF 303 will further understand that there is an ongoing authentication in place for the UE 205 and so the Target AMF/SEAF 303 will attempt to contact the correct AUSF 305 (either directly or via a co-located SEAF) based on the routing ID.

Accordingly, the Target AMF/SEAF 303 sends to the appropriate AUSF 305, the Nausf_UEAuthentication_Authenticate Request containing the SUCI, SNN and the received AMF_AUTN (to authenticate itself with AUSF 305 in order to fetch the UE security context related to the ongoing primary authentication) to continue the primary authentication (see messaging 335).

At Step 10b, the AUSF 305 verifies the received AMF_AUTN with the UE authentication information locally stored for the SUCI. If the Target AMF/SEAF 303 provided AMF_AUTN matches with the potentially locally stored AMF_AUTN for a SUCI, then the AUSF 305 considers the AMF_AUTN verification (i.e., Reallocated AMF authentication) as successful and continues the primary authentication for the UE through the Target AMF/SEAF 303 using the UE authentication information locally stored.

At Step 10c, the AUSF 305 sends the Nausf_UEAuthentication_Authenticate Response with authentication challenge to the Target AMF/SEAF 303 (either directly or via SEAF co-located with the AMF), where the Nausf_UEAuthentication_Authenticate Response contains the AV (e.g., AUTN and RAND/5G Serving network AV, etc.).

At Step 11a, the AUSF 305 and the UE 205 may exchange EAP-Request/AKA'-Notification and EAP-Response/AKA'-Notification messages via the target SEAF. The target SEAF shall transparently forward these messages. The UE 205 and the 5G network perform the primary authentication by mutually authenticating each other, e.g., as specified in 3GPP TS 33.501.

At Step 11b, the AUSF 305 if finds that the RES* verification (if 5G AKA) or Authentication challenge verification (EAP-AKA') is successful, then the 5G network considers the primary authentication as successful.

At Step 12, the AUSF 305 sends to the SEAF of the Target AMF/SEAF 303, the Nausf_UEAuthentication_Authenticate Response containing: an authentication result, the SUPI of the UE 205 and Kseaf (the anchor key). Further the co-located SEAF sends the ABBA parameters, authentication result as success, and Kamf key to the AMF aspect of the Target AMF/SEAF 303.

At Step 13a, the Target AMF/SEAF 303 on receiving the Kamf and authentication result triggers the NAS Security mode command (NAS SMC) procedure with UE 205 to set up the UE NAS security context.

At Step 13b, after a successful NAS SMC, the Target AMF/SEAF 303 sends an initial Security context setup message to the RAN 210 with Kgnb key to trigger AS Security mode command (AS SMC) procedure between the UE 205 and the RAN 210. The RAN 210 initiates AS SMC with the UE 2305 and performs successful AS SMC to set up the UE AS Security context.

At Step 13c, after a successful AS Security setup, the Target AMF/SEAF 303 sends a ciphered and integrity protected Registration Accept message to the UE 205.

In an alternative implementation of the above procedure, the AUSF 305 may provide the Initial AMF/SEAF 301, an indicator instead of AMF_AUTN to indicate the availability of AV and security context for a SUPI/SUCI in the AUSF 305. In this case, the usage and handling of this new indicator will be similar to the AMF_AUTN.

According to a second solution, when an initial AMF's slice capability is considered incompatible with the UE's Slice subscription data by the UDM, the primary authentication is still performed between the UE and the 5G network via the initial AMF, but post successful primary authentication, the Kseaf key and/or the Kamf key are not provided to the initial AMF. But instead of a Slice incompatibility indication being sent to the initial AMF to trigger the initial AMF to initiate an AMF reallocation procedure and after a successful reallocation of AMF, the AUSF provides the UE security context generated out of successful primary authentication to the Target AMF/SEAF 303 and Target AMF/SEAF 303 takes care of the remaining UE registration procedure with no knowledge of AMF reallocation to the UE.

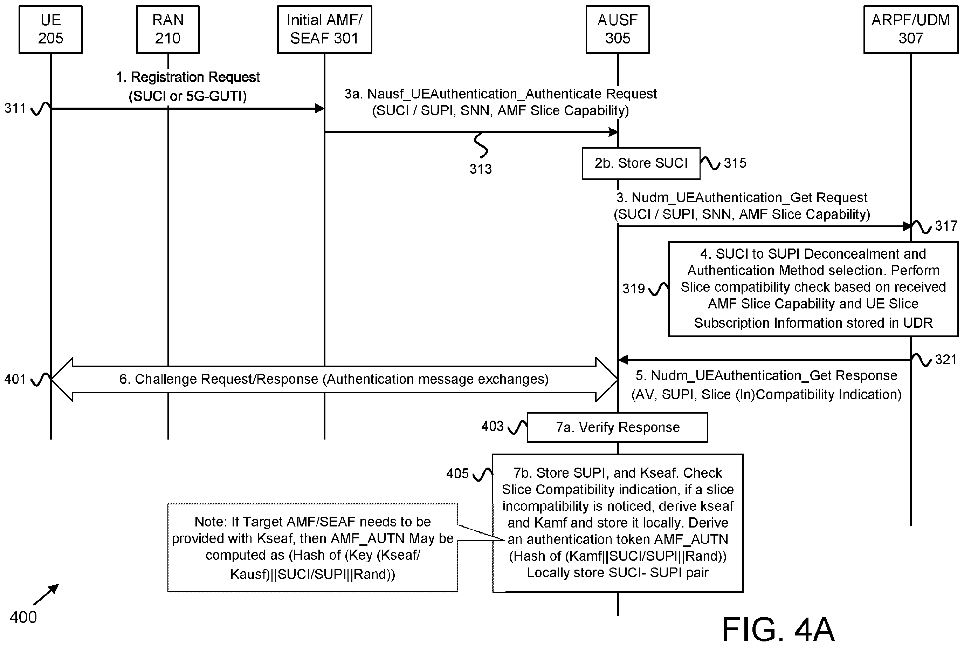

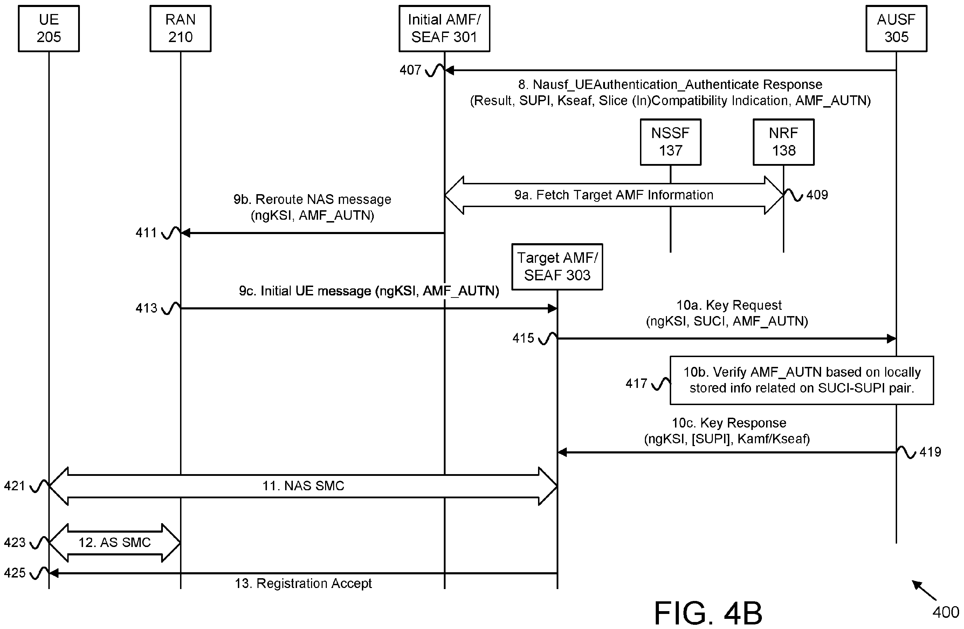

Figure 4A and 4B depict signaling flow of a procedure 400 for AMF slice capability verification and security provision during AMF reallocation, according to the second solution for AMF reallocation security control. The signaling flow illustrates AMF slice capability-based UE Security handling during primary authentication. The procedure 400 involves the UE 205, the RAN 210, the Initial AMF with co-located SEAF (depicted as combined entity "Initial AMF/SEAF" 301), the Target AMF with co-located SEAF (depicted as combined entity "Target AMF/SEAF" 303), the AUSF 305, and the ARPF co-located with UDM (depicted as combined entity "ARPF/UDM" 307).

At Step 1, the UE 205 sends the Registration Request with SUCI or 5G-GUTI to the initial AMF as described in Step 1 of Figure 3A (see messaging 311).

At Step 2a, the Initial AMF/SEAF 301 sends to the AUSF 305 the received initial UE message along with the SNN and AMF Slice Capabilities IE as described in Step 2a of Figure 3A (see messaging 313).

At Step 2b, the AUSF 305 verifies that the requesting initial SEAF 301 in the serving network is entitled to use the SNN and temporarily stores the received SNN and the User Subscription ID (i.e., SUCI or SUPI) in its local memory, as described in Step 2b of Figure 3A (see block 315).

At Step 3, the AUSF 305 sends to the ARPF/UDM 307 a Nudm_UEAuthentication_Get Request containing the AMF Slice Capabilities IE, as described in Step 3 of Figure 3A (see messaging 317).

At Step 4, upon reception of the Nudm_UEAuthentication_Get Request, the ARPF/UDM 307 invokes a Subscription Identifier De-concealing Function ("SIDF") and selects an Authentication Method, as described in Step 4 of Figure 3A (see block 319). Based on the ARPF/UDM 307 determination of AMF slice compatibility to serve UE, the above described Case 1 or Case 2 may be carried out. In the embodiments of Figure 4A-4B, it is assumed that Case 2 applies and the Initial AMF/SEAF 301's network slice is considered incompatible for the UE 205's service, therefore the AMF reallocation is triggered, and the following steps 5-13 will be executed.

At Step 5, the ARPF/UDM 307 sends a Nudm_UEAuthentication_Get Response in reply to the Nudm_UEAuthentication_Get Request to the AUSF 305, where the Nudm_UEAuthentication_Get Response contains the AV, SUPI and Slice Compatibility Indicator IE with Slice incompatible indication, as described in Step 5 of Figure 3A (see messaging 321).

At Step 6, if an AMF slice incompatibility is indicated by the ARPF/UDM 307 in the Slice Compatibility Indicator in the Nudm_UEAuthentication_Get Response message, then the AUSF 305 stores the AMF incompatibility information, UE authentication information such as AV (example, 5G HE AV/EAP-AKA' AV/Any AV), authentication method indicated by the ARPF/UDM 307, SUCI-SUPI pair based on the SUPI received. Additionally, the AUSF 305 generates the AUSF key (Kausf) and derives a reallocated AMF authentication token AMF_AUTN using any one of the following options for AMF_AUTN derivation:
- Option 1: AMF_AUTN = Hash (Kausf∥SUPI∥Rand used in AV), where the AUSF 305 derives the SEAF key (Kseaf) and provides the Kseaf to the SEAF co-located in the Target AMF/SEAF 303 after successful AMF reallocation.
- Option 2: AMF_AUTN = Hash (Kseaf∥SUPI∥Rand used in AV), where the AUSF 305 derives the Kseaf and provides the Kseaf to the SEAF co-located in the Target AMF/SEAF 303 after successful AMF reallocation.
- Option 3: AMF_AUTN = Hash (Kamf∥SUPI∥Rand used in AV), where the AUSF 305 derives the Kseaf and the Kamf provides the Kamf to the Target AMF/SEAF 303 after successful AMF reallocation.

The AUSF 305 stores the AMF incompatibility indication, Kausf key and the AMF_AUTN along with the UE authentication information in its local memory and sends the Nausf_UEAuthentication_Authenticate Response with authentication challenge to the Initial AMF/SEAF 301 (either directly or via SEAF co-located with the AMF), where the Nausf_UEAuthentication_Authenticate Response contains the AV (example AUTN and RAND/5G Serving network AV, etc.). The AUSF 305 and the UE 205 may exchange EAP-Request/AKA'-Notification and EAP-Response/AKA'-Notification messages via the initial SEAF. The initial SEAF shall transparently forward these messages. The UE 205 and the 5G network perform the primary authentication by mutually authenticating each other, e.g., as specified in TS 33.501.

At Step 7a, the AUSF 305 if finds that the RES* verification (if 5G AKA) or Authentication challenge verification (EAP-AKA') is successful, then the 5G network considers the primary authentication as successful.

At Step 7b, after successful primary authentication determination at the AUSF 305, the AUSF 305 derives Kseaf from Kausf (if not performed in step before step 6 alternatively can perform here). Because of the Slice incompatibility indication received in step 5 from ARPF/UDM 307, the AUSF 305 locally stores the SUPI with SUCI, Slice incompatibility indication, Kseaf and the AMF_AUTN (i.e., derived as described in the above description of step 6).

Continuing on Figure 4A, at Step 8 the AUSF 305 sends to the SEAF of the Initial AMF/SEAF 301, the Nausf_UEAuthentication_Authenticate Response message containing SUCI/SUPI, authentication result as success, Slice Incompatibility Indication and AMF_AUTN. The SEAF forwards the received SUCI, authentication result as success, the Slice Incompatibility Indication and AMF_AUTN (see messaging 407).

The Initial AMF/SEAF 301 on receiving the SUCI, authentication result, with the Slice Incompatibility Indication and AMF _AUTN, will understand that the initiated primary authentication procedure for the UE 205 with SUCI was successful, but no NAS security (Kamf) was provided due to AMF's Slice incompatibility with the UE's Slice Requirements and Slice subscription data. Accordingly, the Initial AMF/SEAF 301 determines to initiate an AMF reallocation procedure based on the procedure specified in TS 23.502 (example AMF reallocation via RAN Reroute).

At Step 9a, the Initial AMF/SEAF 301 fetches Target AMF ("T-AMF") information from the NSSF 137 and NRF 138, e.g., by performing steps 3a-6b (as applicable) as specified in clause 4.2.2.2.3 ("Registration with AMF re-allocation") of 3GPP TS 23.502 (see process 409)

At Step 9b, the Initial AMF/SEAF 301 further sends the Reroute NAS message to the NGRAN, wherein the Reroute RAN message contains the initial UE message and in addition contains the ngKSI (to indicate that a primary authentication has been successful executed, and security has been generated and available in the network), Slice Incompatibility indication and AMF_AUTN (see messaging 411).

At Step 9c, the RAN 210 forwards the received Reroute NAS message to the Target AMF/SEAF 303 which contains, Initial UE message, ngKSI, Slice Incompatibility indication and AMF_AUTN (see messaging 413).

At Step 10a, the Target AMF/SEAF 303 on receiving the initial UE message (i.e., Reroute NAS message) containing the ngKSI, Slice Incompatibility indication and AMF_AUTN will understand that the due to slice incompatibility the initial message has been rerouted to it from a different AMF. Accordingly, the Target AMF/SEAF 303 does not includes its slice capabilities, considering that it has selected by the NSSF based on its slice capability). The Target AMF/SEAF 303 will also understand that an authentication was already successfully performed for the UE 205 (as indicated by ngKSI) and so the Target AMF/SEAF 303 will attempt to contact the correct AUSF 305 (either directly or via a co-located SEAF) based on the routing ID.

The Target AMF/SEAF 303 sends to appropriate AUSF 305, the Nausf_UEAuthentication_Authenticate Request containing the SUCI, SNN, ngKSI and the received AMF_AUTN (see messaging 415). The AMF_AUTN will allow the Target AMF/SEAF 303 to authenticate itself with AUSF 305 in order to fetch the UE security context related to the ongoing primary authentication. Alternatively, the AMF_AUTN will indicates to the AUSF 305 that an authenticate request coming through the Target AMF/SEAF 303 has an AV and security context already available in the AUSF 305.

At Step 10b, the AUSF 305 verifies the received AMF_AUTN based on the UE authentication information locally stored for the SUCI (see block 417). If the Target AMF/SEAF 303 provided AMF_AUTN matches with the locally stored AMF_AUTN for a SUCI, then the AUSF 305 considers the AMF_AUTN verification (i.e., Reallocated AMF authentication) as successful and fetches the security context Kausf and Kseaf (as indicated by the ngKSI).

At Step 10c, the AUSF 305 sends to SEAF of the Target AMF/SEAF 303, the Nausf_UEAuthentication_Authenticate Response (see messaging 419). Here, the response contains the authentication result, SUPI and Kseaf (the anchor key). Further the SEAF sends the ABBA parameters, authentication result as success, and Kamf key to the Target AMF/SEAF 303.

Alternatively, the AUSF 305 sends to the Target AMF/SEAF 303, the Nausf_UEAuthentication_Authenticate Response containing authentication result, SUPI and Kamf (derived from Kseaf/Kausf).

At Step 11, the Target AMF/SEAF 303 on receiving the Kamf and authentication result triggers the NAS Security mode command (NAS SMC) procedure with UE to set up the UE NAS security context (see process 421).

At Step 12, after a successful NAS SMC, the Target AMF/SEAF 303 sends an initial Security context setup message to the RAN 210 with Kgnb key to trigger AS Security mode command (AS SMC) procedure between the UE 205 and the RAN 210. The RAN 210 initiates AS SMC with the UE 205 and performs successful AS SMC to set up the UE AS Security context (see process 423).

At Step 13, after a successful AS Security setup, the Target AMF/SEAF 303 sends a ciphered and integrity protected Registration Accept message to the UE (see messaging 425).

According to a third solution, when an initial AMF's slice capability is considered incompatible with the UE's Slice subscription data by the UDM, the primary authentication is still performed between the UE and the 5G network via the initial AMF as described in the second solution, but with a common security anchor function ("CSEAF") being introduced in the serving network which acts as the security control function ("SECF") and mediates the provisioning of UE related security context to the slice specific network functions (e.g., AMF).

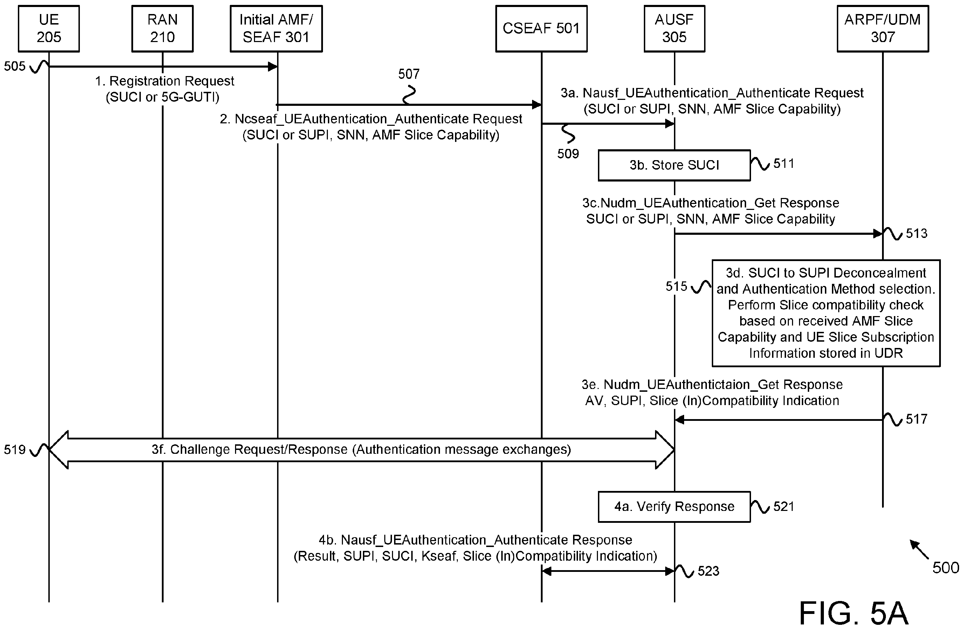

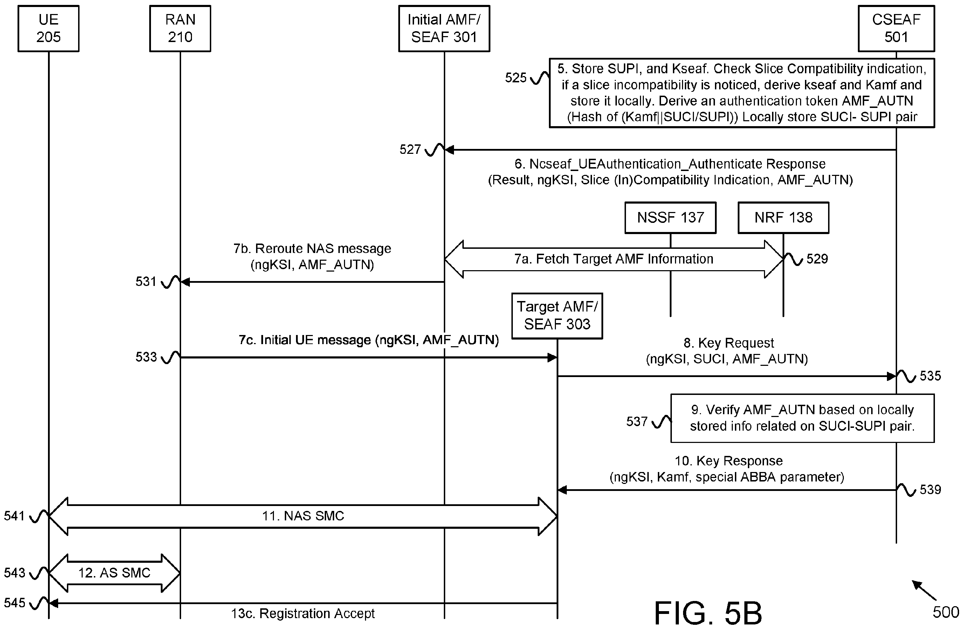

Figure 5A and 5B depict signaling flow for a procedure 500 illustrating one embodiment of AMF slice capability verification and security provision for reallocated AMF with CSEAF, according to the third solution for AMF reallocation security control. The signaling flow illustrates AMF slice capability-based UE Security handling with CSEAF during primary authentication. The procedure 500 involves the UE 205, the RAN 210, the Initial AMF with co-located SEAF (depicted as combined entity "Initial AMF/SEAF" 301), the Target AMF with co-located SEAF (depicted as combined entity "Target AMF/SEAF" 303), a CSEAF 501, the AUSF 305, and the ARPF co-located with UDM (depicted as combined entity "ARPF/UDM" 307).

At Step 1, the UE sends the Registration Request with SUCI or 5G-GUTI to the initial AMF (see messaging 505).

At Step 2, the Initial AMF/SEAF 301 forwards the received initial UE message containing Registration Request to the co-located SEAF by including the AMF Slice Capabilities information element. The co-located SEAF further invokes the Nausf_UEAuthentication service by sending a Ncseaf_UEAuthentication_Authenticate Request message to the CSEAF 501 (see messaging 507). The Ncseaf_UEAuthentication_Authenticate Request message shall contain SUCI/SUPI, Serving Network Name (SNN) and AMF Slice Capabilities. The new IE AMF Slice Capabilities can indicate one or more slice or service information (example S-NSSAIs) supported by the particular AMF.

At Step 3a, the CSEAF 501 forwards the initiated Authentication request to AUSF 305 in Nausf_UEAuthentication_Authenticate Request message with SUCI/SUPI, SNN, AMF Slice Capabilities (see messaging 509).

At Step 3b, the AUSF 305 checks that the requesting SEAF in the serving network is entitled to use the serving network name in the Nausf_UEAuthentication_Authenticate Request by comparing the serving network name with the expected serving network name. The AUSF 305 stores the received serving network name and SUCI/SUPI temporarily in its local memory (see block 511).

At Step 3c, the AUSF 305 sends to the ARPF/UDM 307 a Nudm_UEAuthentication_Get Request containing, SUCI or SUPI, SNN, and AMF Slice Capabilities (see messaging 513).

At Step 3d, upon reception of the Nudm_UEAuthentication_Get Request, the ARPF/UDM 307 invokes a Subscription Identifier De-concealing Function ("SIDF") to deconceal the SUCI into SUPI (if a SUCI is received) and selects an authentication method (see block 515). Further the ARPF/UDM 307, in response to AMF Slice Capabilities information received, fetches the SUPI related UE Slice subscription Information from the UDR and determines if the AMF's network slice capability is capable of serving the specific UE according to the UE's slice subscription data.

Based on the ARPF/UDM 307 determination of AMF slice compatibility to serve UE, the above described Case 1 or Case 2 may be carried out. In the embodiments of Figure 5A-5B, it is assumed that Case 2 applies and the Initial AMF/SEAF 301's network slice is considered incompatible for the UE 205's service, therefore the AMF reallocation is triggered, and the following steps 3e-13 will be executed.

At Step 3e, the ARPF/UDM 307 sends a Nudm_UEAuthentication_Get Response in reply to the Nudm_UEAuthentication_Get Request to the AUSF 305, where the Nudm_UEAuthentication_Get Response contains the AV, SUPI and Slice Compatibility Indicator IE with Slice incompatible indication (see messaging 517). The Slice Compatibility Indication can be for example, a single bit indicator where '0' indicates that the AMF Slice is incompatible for the UE's slice subscription and '1' indicates that the AMF Slice is compatible for the UE's slice subscription.

Alternatively, based on the operator's implementation, the Slice Compatibility Indication sent by the ARPF/UDM 307 to the AUSF 305 can be in any format to indicate the AMF Slice compatibility and incompatibility towards a UE service and UE slice subscription data accordingly.

At Step 3f, if an AMF slice incompatibility is indicated by the ARPF/UDM 307 in the Slice Compatibility Indicator in the Nudm_UEAuthentication_Get Response message, the AUSF 305 determines to perform authentication via the initial AMF but not to share the Security context with initial AMF. The AUSF 305 further stores the SUCI, SUPI, Kausf and the slice incompatibility indication. The AUSF 305 sends the Nausf_UEAuthentication_Authenticate Response with authentication challenge to the initial AMF (either directly or via SEAF co-located with the AMF) via the CSEAF 501, where the Nausf_UEAuthentication_Authenticate Response contains the AV (example AUTN and RAND/5G Serving network AV, etc.). The AUSF 305 and the UE 205 may exchange EAP-Request/AKA'-Notification and EAP-Response/AKA'-Notification messages via the SEAF (see process 519). The SEAF shall transparently forward these messages. The UE 205 and the 5G network perform the primary authentication by mutually authenticating each other, e.g., as specified in 3GPP TS 33.501.

At Step 4a, the AUSF 305 if finds that the RES* verification (if 5G AKA) or Authentication challenge verification (EAP-AKA') is successful, then the 5G network considers the primary authentication as successful (see block 521). Post successful primary authentication determination at the AUSF 305, the AUSF 305 derives Kseaf from Kausf.

At Step 4b, the AUSF 305 sends to the CSEAF 501 the Nausf_UEAuthentication _Authenticate Response with authentication result, SUPI-SUCI pair, Kseaf and Slice incompatibility indication (see messaging 523).

Continuing on Figure 5B, at Step 5 the CSEAF 501, in response to receiving Slice incompatibility indication, stores the Slice incompatibility indication, SUCI-SUPI pair, Kseaf and derive a reallocated AMF authentication token AMF_AUTN as Hash (SUPI∥Kseaf∥Rand) and stores the AMF_AUTN along with the UE authentication information in its local memory (see block 525).

Note that the new Information Element ("IE") Slice Capability Indicator may contain a specific unique value to indicate a slice incompatibility scenario and a different specific value to indicate a slice compatibility scenario.

Two options are described herein for AMF_AUTN derivation:
- Option 1: AMF_AUTN = Hash (Kseaf∥SUPI∥Rand used in AV), where the CSEAF 501 derives provides the Kseaf to SEAF co-located in the Target AMF/SEAF 303 after successful AMF reallocation.
- Option 2: AMF_AUTN = Hash (Kamf∥SUPI∥Rand used in AV), where the CSEAF 501 derives the Kamf and provides the Kamf to the Target AMF/SEAF 303 after successful AMF reallocation.

At Step 6, the CSEAF 501 sends to the initial AMF (directly or via SEAF) the Ncseaf_UEAuthentication_Authenticate Response message with authentication result, ngKSI corresponding to the newly derived UE security context, Slice incompatibility indication and AMF_AUTN (see messaging 527).

At Step 7a, the Initial AMF/SEAF 301 on receiving the SUCI, authentication result, ngKSI, with the Slice Incompatibility Indication and AMF _AUTN, will understand that the initiated primary authentication procedure for the UE with SUCI was successful, but no NAS security (Kamf) was provided due to AMF's Slice incompatibility with the UE's Slice Requirements and Slice subscription data. Accordingly, the Initial AMF/SEAF 301 determines to initiate an AMF reallocation procedure based on the procedure specified in TS 23.502 (example AMF reallocation via RAN Reroute).

The Initial AMF/SEAF 301 fetches Target AMF ("T-AMF") information from the NSSF 137 and NRF 138, e.g., by performing steps 3a-6b (as applicable) as specified in clause 4.2.2.2.3 ("Registration with AMF re-allocation") of 3GPP TS 23.502 (see process 529).

At Step 7b, the Initial AMF/SEAF 301 further sends the Reroute NAS message to the RAN 210 (see messaging 531). Here, the Reroute RAN message contains the initial UE message and in addition contains the ngKSI (to indicate that a primary authentication has been successful executed, and security has been generated and available in the network), Slice Incompatibility indication and AMF_AUTN.

At Step 7c, the RAN 210 forwards the received Reroute NAS message to the Target AMF/SEAF 303 which contains, Initial UE message, ngKSI, Slice Incompatibility indication and AMF_AUTN (see messaging 533).

At Step 8, the Target AMF/SEAF 303 on receiving the initial UE message (i.e., Reroute NAS message) containing the ngKSI, Slice Incompatibility indication and AMF_AUTN will understand that the due to slice incompatibility the initial message has been rerouted to it from a different AMF. Accordingly, the Target AMF/SEAF 303 does not includes its slice capabilities, considering that it has selected by the NSSF based on its slice capability. The Target AMF/SEAF 303 will further understand that an authentication procedure was already performed successfully for the UE 205 (as indicated by ngKSI) and so the Target AMF/SEAF 303 will attempt to contact the correct CSEAF 501 (either directly or via a co-located SEAF) based on the routing ID. The Target AMF/SEAF 303 sends to the CSEAF 501, a Key Request message containing the SUCI, ngKSI and the received AMF_AUTN (to authenticate itself with the CSEAF 501 in order to fetch the UE security context related to the ongoing primary authentication) (see messaging 535).

At Step 9, the CSEAF 501 verifies the received AMF_AUTN based on the UE authentication information locally stored for the SUCI (see block 537). If the Target AMF/SEAF 303 provided AMF_AUTN matches with the locally stored AMF_AUTN for a SUCI, then the CSEAF 501 considers the AMF_AUTN verification (i.e., Reallocated AMF authentication) as successful and fetches the security context Kseaf (as indicated by the ngKSI) and derives a Kamf.

At Step 10, the CSEAF 501 sends to Target AMF/SEAF 303, the Key Response message containing authentication result, ABBA parameter SUPI and Kamf (see messaging 539).

At Step 11, the Target AMF/SEAF 303 on receiving the Kamf and authentication result triggers the NAS Security mode command (NAS SMC) procedure with UE to set up the UE NAS security context (see process 541).

At Step 12, after a successful NAS SMC, the Target AMF/SEAF 303 sends an initial Security context setup message to the RAN 210 with Kgnb key to trigger AS Security mode command (AS SMC) procedure between the UE 205 and the RAN 210. The RAN 210 initiates AS SMC with the UE 205 and performs successful AS SMC to set up UE AS Security context (see process 543).

At Step 13, after a successful AS Security setup, the Target AMF/SEAF 303 sends a ciphered and integrity protected Registration Accept message to the UE 205 (see messaging 545).

Note that in alternative embodiments, the CSEAF 501 functionality may instead be offered as a service by any well-connected NFs (such as NSSF, NRF or AUSF) to handle UE registration and services that need strict slice isolation and related security aspects. In such embodiments, the Kcseafmay be replaced with an appropriate NF key, such as Knssf, Knrf, Kausf, etc. and the service operation Ncseaf_UEAuthentication_Authenticate may be replaced with an equivalent service operation, such as Nnssf_UEAuthentication_Authenticate, Nnrf_UEAuthentication_Authenticate, Nausf_UEAuthentication_Authenticate, etc.

According to a fourth solution, performing an authentication with reallocated AMF described above in the first solution may be optimized to perform without AMF_AUTN computation.

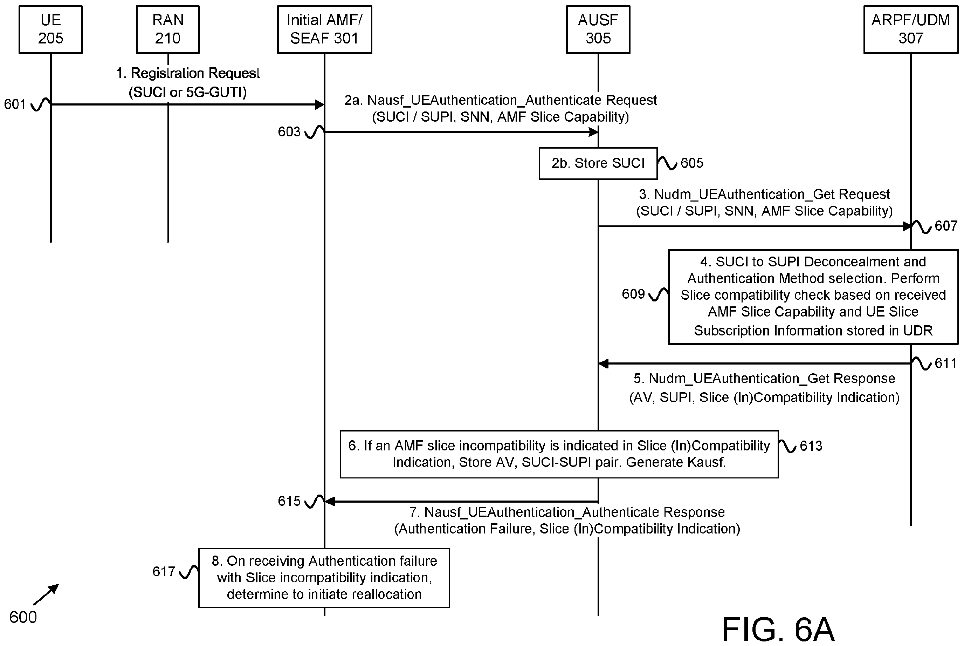

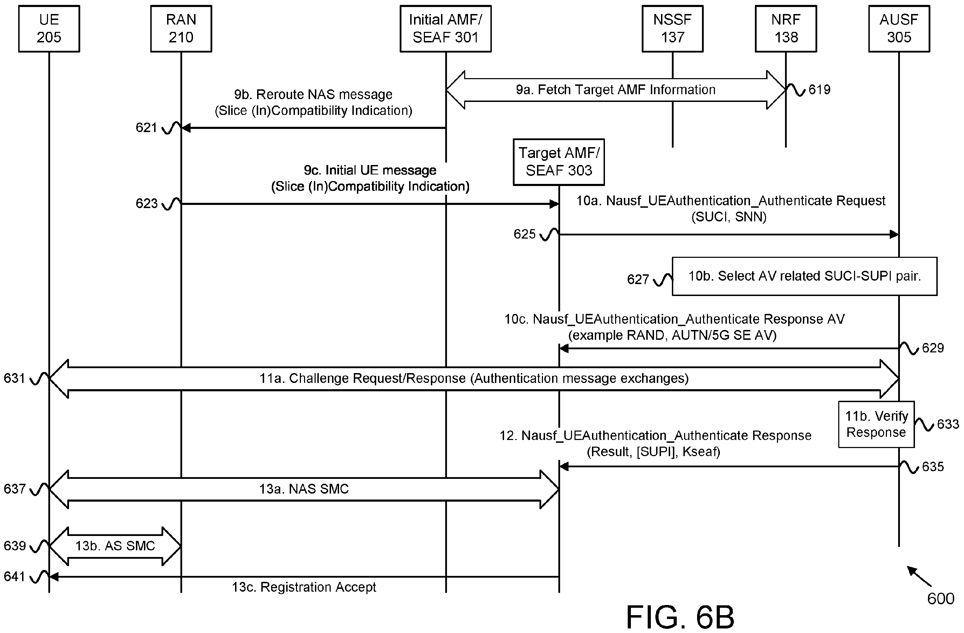

Figure 6A and 6B depict signaling flow for a procedure 600 illustrating one embodiment of AMF slice capability verification and UE authentication through reallocated AMF, according to the fourth solution for AMF reallocation security control. The signaling flow illustrates AMF slice capability-based UE authentication determination. The procedure 600 involves the UE 205, the RAN 210, the Initial AMF with co-located SEAF (depicted as combined entity "Initial AMF/SEAF" 301), the Target AMF with co-located SEAF (depicted as combined entity "Target AMF/SEAF" 303), the AUSF 305, the NSSF 137, the NRF 138, and the ARPF co-located with UDM (depicted as combined entity "ARPF/UDM" 307).

At Step 1, the UE 205 sends the Registration Request with SUCI or 5G-GUTI to the Initial AMF/SEAF 301 (see messaging 601).

At Step 2a, the Initial AMF/SEAF 301 forwards the received initial UE message containing Registration Request to the SEAF by including the AMF Slice Capabilities information element. The SEAF further invoke the Nausf_UEAuthentication service by sending a Nausf_UEAuthentication_Authenticate Request message to the AUSF 305 (see messaging 603). The Nausf_UEAuthentication_Authenticate Request message contains SUCI/SUPI, SNN and AMF Slice Capabilities.

At Step 2b, the AUSF 305 checks that the requesting SEAF in the serving network is entitled to use the serving network name in the Nausf_UEAuthentication_Authenticate Request by comparing the serving network name with the expected serving network name. The AUSF 305 stores the received serving network name and SUCI/SUPI temporarily in its local memory (see block 605).

At Step 3, the AUSF 305 sends to the ARPF/UDM 307 a Nudm_UEAuthentication_Get Request containing, SUCI or SUPI, SNN, and AMF Slice Capabilities (see messaging 607).

At Step 4, upon reception of the Nudm_UEAuthentication_Get Request, the ARPF/UDM 307 invokes a Subscription Identifier De-concealing Function ("SIDF") to deconceal the SUCI into SUPI (if a SUCI is received) and selects an authentication method (see block 609). Further the ARPF/UDM 307, in response to AMF Slice Capabilities information received, fetches the SUPI related UE Slice subscription Information from the UDR and determines based on AMF's network slice capability that if an AMF is capable of serving the specific UE according to the UE's slice subscription data. Based on the ARPF/UDM 307 determination of AMF slice compatibility to serve UE, the above described Case 1 or Case 2 may be carried out. In the embodiments of Figure 6A-6B, it is assumed that Case 2 applies and the Initial AMF/SEAF 301's network slice is considered incompatible for the UE 205's service, therefore the AMF reallocation is triggered and the following steps 5-13c will be executed.

At Step 5, the ARPF/UDM 307 sends a Nudm_UEAuthentication_Get Response in reply to the Nudm_UEAuthentication_Get Request to the AUSF 305, where the Nudm_UEAuthentication_Get Response contains the AV, SUPI and Slice Compatibility Indicator IE with Slice incompatible indication (see messaging 611). The Slice Compatibility Indication can be a single bit indicator where for example '0' indicates that the AMF Slice is incompatible for the UE's slice subscription and '1' indicates that the AMF Slice is compatible for the UE's slice subscription.

Alternatively, based on the operator's implementation, the Slice Compatibility Indication sent by the ARPF/UDM 307 to the AUSF 305 can be in any format to indicate the AMF Slice compatibility and incompatibility towards a UE service and UE slice subscription data accordingly.

At Step 6, if an AMF slice incompatibility is indicated by the ARPF/UDM 307 in the Slice Compatibility Indicator in the Nudm_UEAuthentication_Get Response message, the AUSF 305 stores the UE authentication information such as AV (example, 5G HE AV/EAP-AKA' AV/Any AV), authentication method indicated by the ARPF/UDM 307, SUCI-SUPI pair based on the SUPI received and further the AUSF 305 generates the Kausf (see block 613).

At Step 7, the AUSF 305 sends to the SEAF of the Initial AMF/SEAF 301, the Nausf_UEAuthentication_Authenticate Response message containing SUCI/SUPI, an Authentication Failure Indication (or an Authentication Paused Indication) along with the Slice Incompatibility Indication (see messaging 615). The co-located SEAF forwards the received SUCI and an Authentication Failure Indication (or an Authentication Paused Indication) along with the Slice Incompatibility Indication to the Initial AMF/SEAF 301.

At Step 8, the Initial AMF/SEAF 301 on receiving the SUCI, an Authentication Failure Indication (or an Authentication Paused Indication) along with the Slice Incompatibility Indication, will understand that the initiated primary authentication procedure for the UE with SUCI was failed (or paused) due to AMF's Slice incompatibility with the UE's Slice Requirements and Slice subscription data and the Initial AMF/SEAF 301 determines to initiate a AMF reallocation procedure based on the procedure specified in TS 23.502 (e.g., AMF reallocation via RAN Reroute) (see block 617).

Even though the Initial AMF/SEAF 301 received an Authentication Failure or Authentication Paused indication from the core network (i.e., SEAF or AUSF), as it also received an AMF's Slice incompatibility indication, the Initial AMF/SEAF 301 does not send anything about the authentication to the UE, but instead only will initiate the AMF reallocation.

Continuing on Figure 6B, at Step 9a the Initial AMF/SEAF 301 fetches Target AMF ("T-AMF") information from the NSSF 137 and NRF 138, e.g., by performing steps 3a-6b (as applicable) as specified in clause 4.2.2.2.3 ("Registration with AMF re-allocation") of 3GPP TS 23.502 (see process 619).

At Step 9b, the Initial AMF/SEAF 301 further sends the Reroute NAS message to the RAN 210 (see messaging 621). Here, the Reroute RAN message contains the initial UE message and in addition may contain the Slice Incompatibility indication.

At Step 9c, the RAN 210 forwards the received Reroute NAS message to the Target AMF/SEAF 303 which contains the Initial UE message and may contain the Slice Incompatibility indication (see messaging 623).

At Step 10a, the Target AMF/SEAF 303 on receiving the initial UE message (i.e., Reroute NAS message) that may contain the Slice Incompatibility indication will understand that due to slice incompatibility the initial message has been rerouted to it (from a different AMF)(so the Target AMF/SEAF 303 does not includes its slice capabilities, considering the it has selected by the NSSF based on its slice capability) and so there is an ongoing/paused authentication in place for the UE and so the Target AMF/SEAF 303 will attempt to contact the correct AUSF 305 (either directly or via a co-located SEAF) based on the routing ID. The Target AMF/SEAF 303 sends to appropriate AUSF 305, the Nausf_UEAuthentication_Authenticate Request containing the SUCI, SNN to continue or better initiate the primary authentication towards the UE (see messaging 625). The request from the Target AMF/SEAF 303 to the AUSF 305 may include an indication to help the AUSF 305 to find the SUCI.

At Step 10b, the AUSF 305 selects the UE authentication information locally stored for the SUCI (see block 627). The AUSF 305 initiates the primary authentication towards the UE through the Target AMF/SEAF 303 using the UE authentication information locally stored. The AUSF 305 may request a fresh AV from the ARPF/UDM 307 again if it does not want to reuse the one retrieved previously triggered by the Initial AMF/SEAF 301.

At Step 10c, the AUSF 305 sends the Nausf_UEAuthentication_Authenticate Response with authentication challenge to the Target AMF/SEAF 303 (either directly or via SEAF co-located with the AMF), where the Nausf_UEAuthentication_Authenticate Response contains the AV (example AUTN and RAND/5G Serving network AV, etc.) (see messaging 629).

At Step 11a, the AUSF 305 and the UE 205 may exchange EAP-Request/AKA'-Notification and EAP-Response/AKA'-Notification messages via the Target SEAF (see process 631). The SEAF shall transparently forward these messages. The UE 205 and the 5G network perform the primary authentication by mutually authenticating each other, e.g., as specified in TS 33.501.

At Step 11b, the AUSF 305 if finds that the RES* verification (if 5G AKA) or Authentication challenge verification (EAP-AKA') is successful, then the 5G network considers the primary authentication as successful (see block 633).

At Step 12, the AUSF 305 sends to SEAF of the Target AMF/SEAF 303, the Nausf_UEAuthentication _Authenticate Response containing authentication result, SUPI and Kseaf (the anchor key) (see messaging 635). Further the SEAF sends the ABBA parameters, authentication result as success, and Kamf key to the Target AMF/SEAF 303.

At Step 13a, the Target AMF/SEAF 303 on receiving the Kamf and authentication result triggers the NAS Security mode command (NAS SMC) procedure with UE to set up the UE NAS security context (see process 637).

At Step 13b, after a successful NAS SMC, the Target AMF/SEAF 303 sends an initial Security context setup message to the RAN 210 with Kgnb key to trigger AS Security mode command (AS SMC) procedure between UE and RAN 210. The RAN 210 initiates AS SMC with UE and performs successful AS SMC to set up UE AS Security context (see process 639).

At Step 13c, after a successful AS Security setup, the Target AMF/SEAF 303 sends a ciphered and integrity protected Registration Accept message to the UE 205 (see messaging 641).

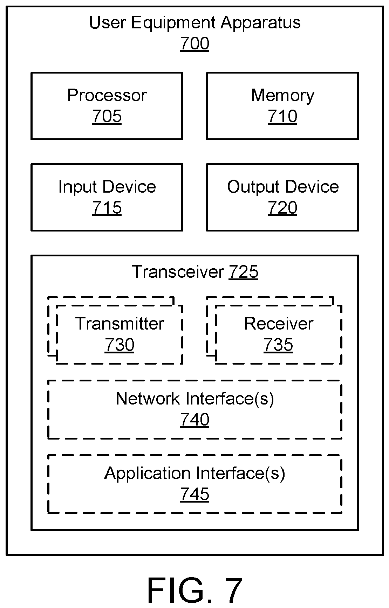

Figure 7 depicts a user equipment apparatus 700 that may be used security context control for AMF reallocation based on a slice capability indication, according to embodiments of the disclosure. In various embodiments, the user equipment apparatus 700 is used to implement one or more of the solutions described above. The user equipment apparatus 700 may be one embodiment of the remote unit 105 and/or the UE 205, described above. Furthermore, the user equipment apparatus 700 may include a processor 705, a memory 710, an input device 715, an output device 720, and a transceiver 725.

In some embodiments, the input device 715 and the output device 720 are combined into a single device, such as a touchscreen. In certain embodiments, the user equipment apparatus 700 may not include any input device 715 and/or output device 720. In various embodiments, the user equipment apparatus 700 may include one or more of: the processor 705, the memory 710, and the transceiver 725, and may not include the input device 715 and/or the output device 720.

As depicted, the transceiver 725 includes at least one transmitter 730 and at least one receiver 735. In some embodiments, the transceiver 725 communicates with one or more cells (or wireless coverage areas) supported by one or more base units 121. In various embodiments, the transceiver 725 is operable on unlicensed spectrum. Moreover, the transceiver 725 may include multiple UE panel supporting one or more beams. Additionally, the transceiver 725 may support at least one network interface 740 and/or application interface 745. The application interface(s) 745 may support one or more APIs. The network interface(s) 740 may support 3GPP reference points, such as Uu, N1, PC5, etc. Other network interfaces 740 may be supported, as understood by one of ordinary skill in the art.

The processor 705, in one embodiment, may include any known controller capable of executing computer-readable instructions and/or capable of performing logical operations. For example, the processor 705 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 705 executes instructions stored in the memory 710 to perform the methods and routines described herein. The processor 705 is communicatively coupled to the memory 710, the input device 715, the output device 720, and the transceiver 725.

In certain embodiments, the processor 705 may include an application processor (also known as "main processor") which manages application-domain and operating system ("OS") functions and a baseband processor (also known as "baseband radio processor") which manages radio functions. In various embodiments, the processor 705 controls the user equipment apparatus 700 to perform the above described UE behaviors.

The memory 710, in one embodiment, is a computer readable storage medium. In some embodiments, the memory 710 includes volatile computer storage media. For example, the memory 710 may include a RAM, including dynamic RAM ("DRAM"), synchronous dynamic RAM ("SDRAM"), and/or static RAM ("SRAM"). In some embodiments, the memory 710 includes non-volatile computer storage media. For example, the memory 710 may include a hard disk drive, a flash memory, or any other suitable non-volatile computer storage device. In some embodiments, the memory 710 includes both volatile and non-volatile computer storage media.

In some embodiments, the memory 710 stores data related to security context control for AMF reallocation based on a slice capability indication. For example, the memory 710 may store various parameters, panel/beam configurations, resource assignments, policies, and the like as described above. In certain embodiments, the memory 710 also stores program code and related data, such as an operating system or other controller algorithms operating on the apparatus 700.

The input device 715, in one embodiment, may include any known computer input device including a touch panel, a button, a keyboard, a stylus, a microphone, or the like. In some embodiments, the input device 715 may be integrated with the output device 720, for example, as a touchscreen or similar touch-sensitive display. In some embodiments, the input device 715 includes a touchscreen such that text may be input using a virtual keyboard displayed on the touchscreen and/or by handwriting on the touchscreen. In some embodiments, the input device 715 includes two or more different devices, such as a keyboard and a touch panel.

The output device 720, in one embodiment, is designed to output visual, audible, and/or haptic signals. In some embodiments, the output device 720 includes an electronically controllable display or display device capable of outputting visual data to a user. For example, the output device 720 may include, but is not limited to, an LCD display, an LED display, an OLED display, a projector, or similar display device capable of outputting images, text, or the like to a user. As another, non-limiting, example, the output device 720 may include a wearable display separate from, but communicatively coupled to, the rest of the user equipment apparatus 700, such as a smart watch, smart glasses, a heads-up display, or the like. Further, the output device 720 may be a component of a smart phone, a personal digital assistant, a television, a table computer, a notebook (laptop) computer, a personal computer, a vehicle dashboard, or the like.

In certain embodiments, the output device 720 includes one or more speakers for producing sound. For example, the output device 720 may produce an audible alert or notification (e.g., a beep or chime). In some embodiments, the output device 720 includes one or more haptic devices for producing vibrations, motion, or other haptic feedback. In some embodiments, all or portions of the output device 720 may be integrated with the input device 715. For example, the input device 715 and output device 720 may form a touchscreen or similar touch-sensitive display. In other embodiments, the output device 720 may be located near the input device 715.

The transceiver 725 communicates with one or more network functions of a mobile communication network via one or more access networks. The transceiver 725 operates under the control of the processor 705 to transmit messages, data, and other signals and also to receive messages, data, and other signals. For example, the processor 705 may selectively activate the transceiver 725 (or portions thereof) at particular times in order to send and receive messages.

The transceiver 725 includes at least transmitter 730 and at least one receiver 735. One or more transmitters 730 may be used to provide UL communication signals to a base unit 121, such as the UL transmissions described herein. Similarly, one or more receivers 735 may be used to receive DL communication signals from the base unit 121, as described herein. Although only one transmitter 730 and one receiver 735 are illustrated, the user equipment apparatus 700 may have any suitable number of transmitters 730 and receivers 735. Further, the transmitter(s) 730 and the receiver(s) 735 may be any suitable type of transmitters and receivers. In one embodiment, the transceiver 725 includes a first transmitter/receiver pair used to communicate with a mobile communication network over licensed radio spectrum and a second transmitter/receiver pair used to communicate with a mobile communication network over unlicensed radio spectrum.

In certain embodiments, the first transmitter/receiver pair used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. In some embodiments, the first transmitter/receiver pair and the second transmitter/receiver pair may share one or more hardware components. For example, certain transceivers 725, transmitters 730, and receivers 735 may be implemented as physically separate components that access a shared hardware resource and/or software resource, such as for example, the network interface 740.

In various embodiments, one or more transmitters 730 and/or one or more receivers 735 may be implemented and/or integrated into a single hardware component, such as a multi-transceiver chip, a system-on-a-chip, an ASIC, or other type of hardware component. In certain embodiments, one or more transmitters 730 and/or one or more receivers 735 may be implemented and/or integrated into a multi-chip module. In some embodiments, other components such as the network interface 740 or other hardware components/circuits may be integrated with any number of transmitters 730 and/or receivers 735 into a single chip. In such embodiment, the transmitters 730 and receivers 735 may be logically configured as a transceiver 725 that uses one more common control signals or as modular transmitters 730 and receivers 735 implemented in the same hardware chip or in a multi-chip module.

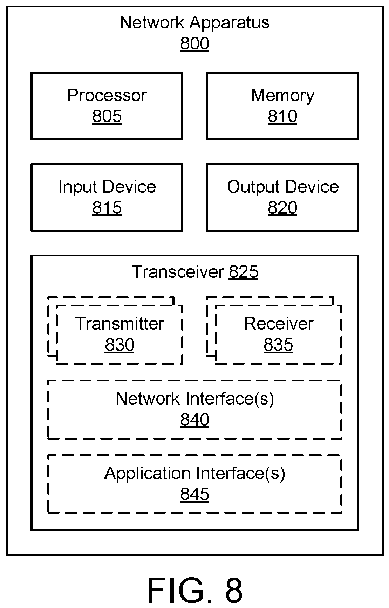

Figure 8 depicts a network apparatus 800 that may be used for security context control for AMF reallocation based on a slice capability indication, according to embodiments of the disclosure. In one embodiment, network apparatus 800 may be one implementation of a RAN node, such as the base unit 121, the RAN node 210, or gNB, described above. Furthermore, the base network apparatus 800 may include a processor 805, a memory 810, an input device 815, an output device 820, and a transceiver 825.

In some embodiments, the input device 815 and the output device 820 are combined into a single device, such as a touchscreen. In certain embodiments, the network apparatus 800 may not include any input device 815 and/or output device 820. In various embodiments, the network apparatus 800 may include one or more of: the processor 805, the memory 810, and the transceiver 825, and may not include the input device 815 and/or the output device 820.

As depicted, the transceiver 825 includes at least one transmitter 830 and at least one receiver 835. Here, the transceiver 825 communicates with one or more remote units 105. Additionally, the transceiver 825 may support at least one network interface 840 and/or application interface 845. The application interface(s) 845 may support one or more APIs. The network interface(s) 840 may support 3GPP reference points, such as Uu, N1, N2 and N3. Other network interfaces 840 may be supported, as understood by one of ordinary skill in the art.

The processor 805, in one embodiment, may include any known controller capable of executing computer-readable instructions and/or capable of performing logical operations. For example, the processor 805 may be a microcontroller, a microprocessor, a CPU, a GPU, an auxiliary processing unit, a FPGA, or similar programmable controller. In some embodiments, the processor 805 executes instructions stored in the memory 810 to perform the methods and routines described herein. The processor 805 is communicatively coupled to the memory 810, the input device 815, the output device 820, and the transceiver 825.

In various embodiments, the network apparatus 800 is a RAN node (e.g., gNB) that sends UE configurations and receives measurement reports, as described herein. In such embodiments, the processor 805 controls the network apparatus 800 to perform the above described behaviors. When operating as a RAN node, the processor 805 may include an application processor (also known as "main processor") which manages application-domain and operating system ("OS") functions and a baseband processor (also known as "baseband radio processor") which manages radio functions.

In various embodiments, the processor 805 controls the network apparatus 800 to perform the above described AUSF behaviors. For example, the network interface 840 receives a first authentication request message from a SEAF that is co-located with an initial AMF. Here, the first authentication request message contains an AMF Slice Capabilities IE. Via the network interface 840, the processor 805 sends a data request message to a UDM and receives a data response message from the UDM. Here, the data request message contains the received AMF Slice Capabilities IE and the data response message includes a Slice compatibility indicator.

The processor 805 determines not to send a SEAF key to the SEAF in response to the Slice Compatibility indicator indicating that an AMF slice is not compatible with registration of a UE (e.g., having a value set to `Slice is incompatible' and/or 'Incompatible Slice'). Via the network interface 840, the processor 805 sends an authentication response message to the SEAF. Here, the authentication response message includes an Authentication Result, a User Subscription Identifier (e.g., SUCI and/or SUPI), and the Slice Compatibility indicator.

In some embodiments, the processor 805 derives an Authentication Token (i.e., AMF_AUTN) for authentication of a Target AMF in response to the Slice compatibility indicator having the value that indicates that an AMF slice is not compatible with the UE registration. In such embodiments, the authentication response message includes the Authentication Token.

In some embodiments, the data request message further contains a SUCI of the UE. In such embodiments, the data response message further contains a SUPI corresponding to the SUCI. In some embodiments, the Authentication Token is derived using a security key selected based on local policy. In such embodiments, the processor 840 stores (e.g., in memory 810) the derived Authentication Token, the SUCI, the received SUPI and the Slice compatibility indicator having the value indicating that an AMF slice is not compatible with the UE registration.

In some embodiments, when the processor 805 determines to provide an SEAF key (i.e., Kseaf) to a target SEAF that is co-located with the Target AMF, then processor 805 also derives the Authentication Token using a hash function that uses as inputs: an AUSF Key (i.e., Kausf), a SUPI of the UE and a random value. In some embodiments, when the processor 805 determines to provide an Kseaf to a target SEAF that is co-located with the Target AMF, then the processor 805 also derives Authentication Token using a hash function that uses as inputs: the Kseaf, the SUPI of the UE and a random value.

In some embodiments, the processor 805 receives (via the network interface 840) a second authentication request message from a target SEAF that is co-located with the Target AMF, where the second authentication request message includes a second Authentication Token. In such embodiments, the processor 805 verifies that the received second Authentication Token matches a locally stored Authentication Token related to a SUCI of the UE and controls the network interface 840 to send a second authentication response message to the target SEAF in response to successful verification of the second Authentication Token. Here, the second authentication response message includes the Kseaf.

In certain embodiments, the second authentication request message includes Authentication Token and a Key Set Identifier (e.g., ngKSI) that identifies a primary UE security context. In such embodiments, the inclusion of the KSI in the second authentication request message indicates that a primary authentication of the UE has been completed successfully.

In certain embodiments, the second authentication request message contains the Authentication Token, the SUCI and the KSI. In such embodiments, the processor 805 skips primary authentication of the UE and provides a security context (e.g., including Kseaf) to a target SEAF that is co-located with the Target AMF.

In certain embodiments, the second authentication request message is received via the target SEAF that is co-located with the Target AMF. In such embodiments, the second authentication response message is sent via the target SEAF, where the second authentication response message includes the Key Set Identifier (e.g., ngKSI), the Kseaf and a SUPI of the UE. Note that this Kseaf is the existing Kseaf and is provided only to the Target AMF/SEAF. Because AMF reallocation is required, this Kseaf is not provided earlier to initial AMF/SEAF.

In some embodiments, when the processor 805 determines to provide an AMF key (i.e., Kamf) to the Target AMF, then the processor 805 also derives the Authentication Token using a hash function that uses as inputs the Kamf, the SUPI of the UE and a random value. In certain embodiments, the second authentication request message contains the Authentication Token and the SUCI. In such embodiments, the processor 805 initiates an exchange of authentication message (e.g., challenge request/response messaging) with the UE via the Target AMF based on the locally stored authentication data (e.g., SUCI/SUPI, AV).

In some embodiments, the first authentication request message is received from a CSEAF, and the first authentication response message is sent to the CSEAF. In such embodiments, the User Subscription Identifier in the first authentication response message includes a SUCI of the UE and a SUPI corresponding to the SUCI.

In various embodiments, the processor 805 controls the network apparatus 800 to perform the above described AMF/SEAF behaviors. When functioning as the initial AMF/SEAF, the processor 805 controls the network interface 840 to send an authentication request message to a NF, such as the AUSF. In other embodiments, the NF may be a CSEAF, an NSSF, an NRF, or another well-connected NF. Here, the authentication request message contains an AMF Slice Capabilities IE. Via the network interface 840, the processor 805 receives an authentication response message from the AUSF, the authentication response message comprising: a Slice compatibility indicator, AMF Authentication Information (e.g., an AMF Authentication Token "AMF_AUTN"), and an authentication result.

Additionally, the processor 805 determines that an AMF slice is not compatible with registration of a UE, said determination based on the received Slice compatibility indicator. The processor 805 further initiates an AMF reallocation procedure of the UE to a Target AMF in response to determining that an AMF slice is not compatible with the UE's registration. The processor 805 controls the network interface 840 to send a Reroute NAS message to a RAN node (e.g., in a NG-RAN). Here, the reroute NAS message comprising the Slice compatibility indication (e.g., with value set to `Slice is incompatible' and/or `Incompatible Slice').

In some embodiments, the authentication response message comprises an authentication token (i.e., AMF_AUTN) for authentication of the Target AMF. In such embodiments, the reroute NAS message also comprises the authentication token. In some embodiments, the Reroute NAS message further comprises a Key Set Identifier (e.g., ngKSI) that identifies a primary UE security context. In such embodiments, the inclusion of the KSI in the Reroute NAS message indicates that a primary authentication of the UE has been completed successfully.

In various embodiments, the Authentication Result received by the initial AMF contains one of the following values: 'Success,' 'Failure' and 'Paused.' In one embodiment, the initial AMF receives an Authentication Result with a value of 'Failure' or with a value of Paused' when the Slice compatibility indicator value is set to `Slice is incompatible' or `Incompatible Slice.' In another embodiment, the initial AMF receives an Authentication Result with a value of 'Success' when the Slice compatibility indicator value is set to `Slice is compatible' and/or `Compatible Slice.'

In some embodiments, the authentication request message is sent via the co-located SEAF during an initial registration of the UE and/or during a mobility registration update of the UE. In such embodiments, the authentication response is received via the co-located SEAF.

When functioning as the target AMF/SEAF, the network interface 840 receives a Reroute NAS message (e.g., containing an initial UE message or Registration Request message) from a RAN node (e.g., in a NG-RAN), the Reroute NAS message containing a Slice compatibility indicator and an Authentication Token (i.e., AMF_AUTN). Here, the Slice compatibility indicator is set to a value that indicates that an initial AMF is not compatible with a UE registration.

Using the network interface 840, the processor 805 sends an authentication request message via the co-located SEAF to a network function, such as an AUSF. In other embodiments, the NF may be a CSEAF, an NSSF, an NRF, or another well-connected NF. Here, the second authentication message contains the Authentication Token and a UE identifier (e.g., SUCI). The processor 805 receives an authentication response message from the AUSF via the SEAF. Here, the authentication response message contains an AMF key (i.e., Kamf) and a SUPI of the UE.

In some embodiments, the authentication request message further comprises a Key Set Identifier (e.g., ngKSI) that identifies a primary UE security context. In such embodiments, the inclusion of the KSI in the authentication request message indicates that a primary authentication of the UE has been completed successfully. In some embodiments, the AUSF sends the authentication response message to the co-located SEAF, said authentication response message containing a SEAF key (i.e., Kseaf). In such embodiments, the SEAF derives the Kamf using the Kseaf.

In various embodiments, the processor 805 controls the network apparatus 800 to perform the above described UDM behaviors. When functioning as the UDM, the network interface 840 that receives a first data request message from an AUSF, the first data request message comprising a User Subscription identifier (e.g., SUCI or SUPI), an AMF Slice Capabilities IE. The processor 805 performs a Slice compatibility check based on the received AMF Slice Capabilities IE and further based on Slice Subscription Data associated with the User Subscription Identifier. Via the network interface 840, the processor 805 sends a data response message to the AUSF, the data response message comprising a Slice compatibility indicator.

In some embodiments, the Slice compatibility indicator is set to a value that indicates whether an AMF slice is compatible to the serve a UE based on the available Slice Subscription Data. In certain embodiments, the Slice compatibility indicator provided by the UDM can contain a value to indicate `Slice is compatible' and/or `Compatible Slice' when the Slice compatibility check determines that AMF slice capabilities indicted by the AMF Slice Capabilities IE satisfy a UE Slice requirement indicated by the Slice Subscription Data.

In other embodiments, the Slice compatibility indicator provided by the UDM can contain a value to indicate `Slice is incompatible' and/or 'Incompatible Slice' when the Slice compatibility check determines that AMF slice capabilities indicted by the AMF Slice Capabilities IE do not satisfy a UE Slice requirement indicated by the Slice Subscription Data.

In various embodiments, the processor 805 controls the network apparatus 800 to perform the above described CSEAF behaviors. When functioning as the CSEAF, the network interface 840 sends a first authentication response message to an initial SEAF co-located with an initial AMF. Here, the authentication response message comprising a User Subscription Identifier (e.g., SUCI and/or SUPI), a SEAF key (i.e., Kseaf) and a Slice compatibility indicator. The processor 805 derives a first Authentication Token (i.e., AMF_AUTN) in response to the Slice compatibility indicator indicating that an AMF slice is not compatible with a UE registration.

The network interface 840 receives a second authentication request message from a Target SEAF co-located with a Target AMF, where the second authentication request message includes a second Authentication Token and a Key Set Identifier (e.g., ngKSI). In such embodiments, inclusion of the KSI indicates that a primary authentication of the UE has been completed successfully. The processor 805 verifies that the second Authentication Token matches the first Authentication Token and sends a second authentication response message to the Target AMF via the network interface 840, the authentication response message comprising an AMF key (i.e., Kamf).

In some embodiments, the network interface 840 receives a first authentication request message from the initial SEAF, where the first authentication request message contains an AMF Slice Capabilities IE. In such embodiments, the processor 805 controls the network interface 840 to forward the first authentication request message to a NF and the network interface 840 receives the first authentication response message from the NF in response to the first authentication request message. Here, sending the first authentication response message to the initial AMF/SEAF includes forwarding the received first authentication response message. In one embodiment, the network function is an AUSF. In other embodiments, the NF may be a CSEAF, an NSSF, an NRF, or another well-connected NF.

In some embodiments, the processor 805 stores to local memory the Authentication Token, the User Subscription Identifier, and the Slice compatibility indicator. In some embodiments, the second authentication response message further includes a SUPI of the UE.

In some embodiments, the Authentication Token is derived using a hash function that uses as inputs the Kseaf, the SUPI of the UE and a random value. In certain embodiments, when the CSEAF determines to provide the Kamf to the Target AMF, then the Authentication Token is derived using a hash function that uses as inputs the Kamf, the SUPI of the UE and a random value.

The memory 810, in one embodiment, is a computer readable storage medium. In some embodiments, the memory 810 includes volatile computer storage media. For example, the memory 810 may include a RAM, including dynamic RAM ("DRAM"), synchronous dynamic RAM ("SDRAM"), and/or static RAM ("SRAM"). In some embodiments, the memory 810 includes non-volatile computer storage media. For example, the memory 810 may include a hard disk drive, a flash memory, or any other suitable non-volatile computer storage device. In some embodiments, the memory 810 includes both volatile and non-volatile computer storage media.

In some embodiments, the memory 810 stores data related to security context control for AMF reallocation based on a slice capability indication. For example, the memory 810 may store parameters, configurations, resource assignments, policies, and the like, as described above. In certain embodiments, the memory 810 also stores program code and related data, such as an operating system or other controller algorithms operating on the apparatus 800.

The input device 815, in one embodiment, may include any known computer input device including a touch panel, a button, a keyboard, a stylus, a microphone, or the like. In some embodiments, the input device 815 may be integrated with the output device 820, for example, as a touchscreen or similar touch-sensitive display. In some embodiments, the input device 815 includes a touchscreen such that text may be input using a virtual keyboard displayed on the touchscreen and/or by handwriting on the touchscreen. In some embodiments, the input device 815 includes two or more different devices, such as a keyboard and a touch panel.

The output device 820, in one embodiment, is designed to output visual, audible, and/or haptic signals. In some embodiments, the output device 820 includes an electronically controllable display or display device capable of outputting visual data to a user. For example, the output device 820 may include, but is not limited to, an LCD display, an LED display, an OLED display, a projector, or similar display device capable of outputting images, text, or the like to a user. As another, non-limiting, example, the output device 820 may include a wearable display separate from, but communicatively coupled to, the rest of the network apparatus 800, such as a smart watch, smart glasses, a heads-up display, or the like. Further, the output device 820 may be a component of a smart phone, a personal digital assistant, a television, a table computer, a notebook (laptop) computer, a personal computer, a vehicle dashboard, or the like.

In certain embodiments, the output device 820 includes one or more speakers for producing sound. For example, the output device 820 may produce an audible alert or notification (e.g., a beep or chime). In some embodiments, the output device 820 includes one or more haptic devices for producing vibrations, motion, or other haptic feedback. In some embodiments, all or portions of the output device 820 may be integrated with the input device 815. For example, the input device 815 and output device 820 may form a touchscreen or similar touch-sensitive display. In other embodiments, the output device 820 may be located near the input device 815.

The transceiver 825 includes at least transmitter 830 and at least one receiver 835. One or more transmitters 830 may be used to communicate with the UE, as described herein. Similarly, one or more receivers 835 may be used to communicate with network functions in the PLMN and/or RAN, as described herein. Although only one transmitter 830 and one receiver 835 are illustrated, the network apparatus 800 may have any suitable number of transmitters 830 and receivers 835. Further, the transmitter(s) 830 and the receiver(s) 835 may be any suitable type of transmitters and receivers.

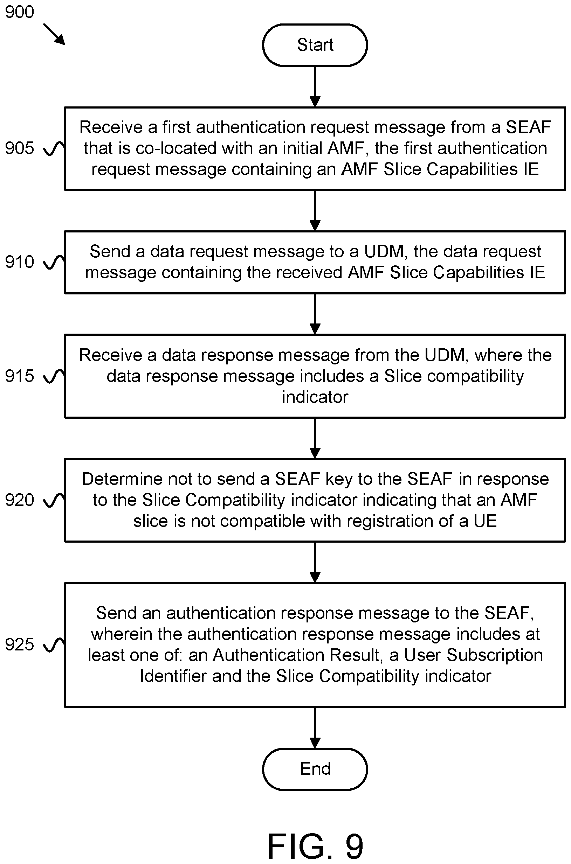

Figure 9 depicts one embodiment of a method 900 for security context control for AMF reallocation based on a slice capability indication, according to embodiments of the disclosure. In various embodiments, the method 900 is performed by an authentication function in a mobile communication network, such as the AUSF 136, the AUSF 305 and/or the network apparatus 700, described above. In some embodiments, the method 900 is performed by a processor, such as a microcontroller, a microprocessor, a CPU, a GPU, an auxiliary processing unit, a FPGA, or the like.

The method 900 begins and receives 905 a first authentication request message from a SEAF that is co-located with an initial AMF. Here, the first authentication request message contains an AMF Slice Capabilities IE. The method 900 includes sending 910 a data request message to a UDM. The method 900 includes receiving 915 a data response message from the UDM. Here, the data request message contains the received AMF Slice Capabilities IE and the data response message contains a Slice compatibility indicator.

The method 900 includes determining 920 not to send a SEAF key to the SEAF in response to the Slice Compatibility indicator indicating that an AMF slice is not compatible with registration of a UE. The method 900 includes sending 925 an authentication response message to the SEAF. Here, the authentication response message includes an Authentication Result, a User Subscription Identifier (e.g., SUCI and/or SUPI), and the Slice Compatibility indicator. In some embodiments, the authentication response message also contains an Authentication Token (i.e., AMF_AUTN). The method 900 ends.

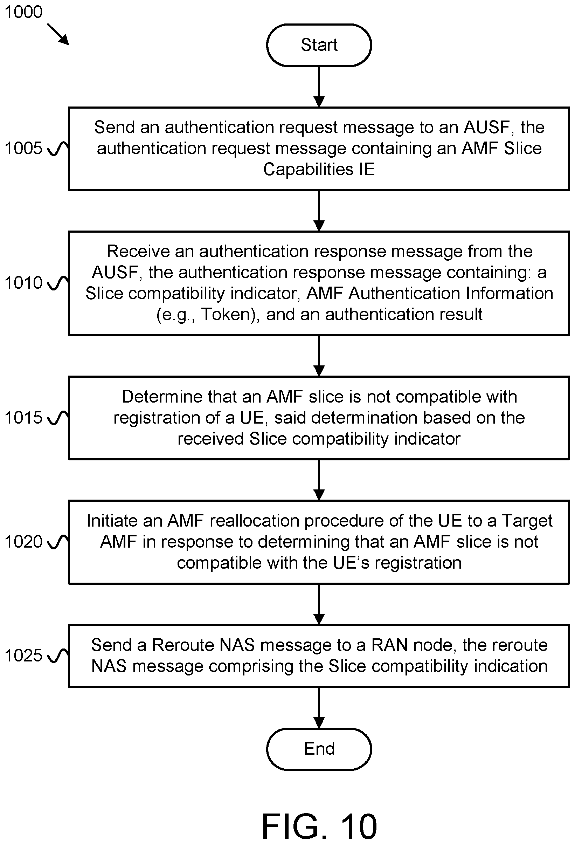

Figure 10 depicts one embodiment of a method 1000 for security context control for AMF reallocation based on a slice capability indication, according to embodiments of the disclosure. In various embodiments, the method 1000 is performed by an Initial AMF having a co-located SEAF, such as the AMF 131, the Initial AMF/SEAF 301, and/or the network apparatus 700, described above. In some embodiments, the method 1000 is performed by a processor, such as a microcontroller, a microprocessor, a CPU, a GPU, an auxiliary processing unit, a FPGA, or the like.

The method 1000 begins and sends 1005 an authentication request message to an AUSF. Here, the authentication request message contains an AMF Slice Capabilities IE. The method 1000 includes receiving 1010 an authentication response message from the AUSF. Here, the authentication response message comprising: a Slice compatibility indicator, AMF Authentication Information (e.g., Authentication Token AMF_AUTN) and an authentication result.

The method 1000 includes determining 1015 that an AMF slice is not compatible with registration of a UE, said determination based on the received Slice compatibility indicator. The method 1000 includes initiating 1020 an AMF reallocation procedure of the UE to a Target AMF in response to determining that an AMF slice is not compatible with the UE's registration. The method 1000 includes sending 1025 a Reroute NAS message to a RAN node. Here, the Reroute NAS message containing the Slice compatibility indication. In some embodiments, the Reroute NAS message contains an Authentication Token (i.e., AMF_AUTN) and a Key Set Identifier (e.g., ngKSI). The method 1000 ends.

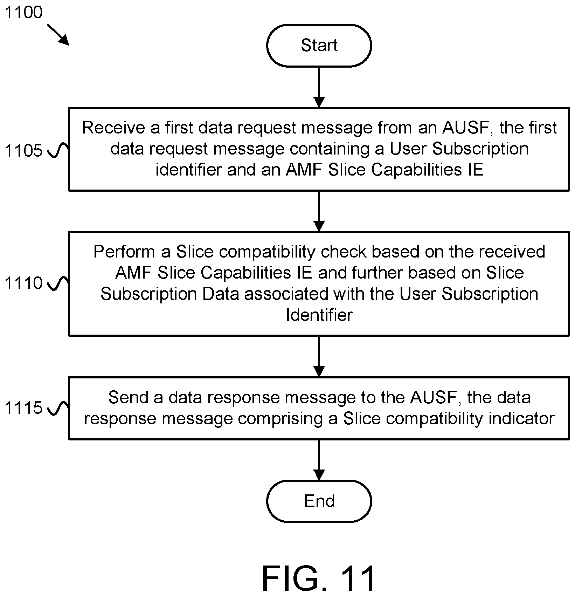

Figure 11 depicts one embodiment of a method 1100 for security context control for AMF reallocation based on a slice capability indication, according to embodiments of the disclosure. In various embodiments, the method 1100 is performed by data management device in a mobile communication network, such as the UDM/UDR 139, the ARPF/UDM 307, and/or the network apparatus 700, described above. In some embodiments, the method 1100 is performed by a processor, such as a microcontroller, a microprocessor, a CPU, a GPU, an auxiliary processing unit, a FPGA, or the like.

The method 1100 begins and receives 1105 a first data request message from an AUSF, where the first data request message contains at least a User Subscription identifier (e.g., SUCI or SUPI) and an AMF Slice Capabilities IE. The method 1100 includes performing 1110 a Slice compatibility check based on the received AMF Slice Capabilities IE and further based on Slice Subscription Data associated with the User Subscription Identifier. The method 1100 includes sending 1115 a data response message to the AUSF, the data response message comprising a Slice compatibility indicator. The method 1100 ends.

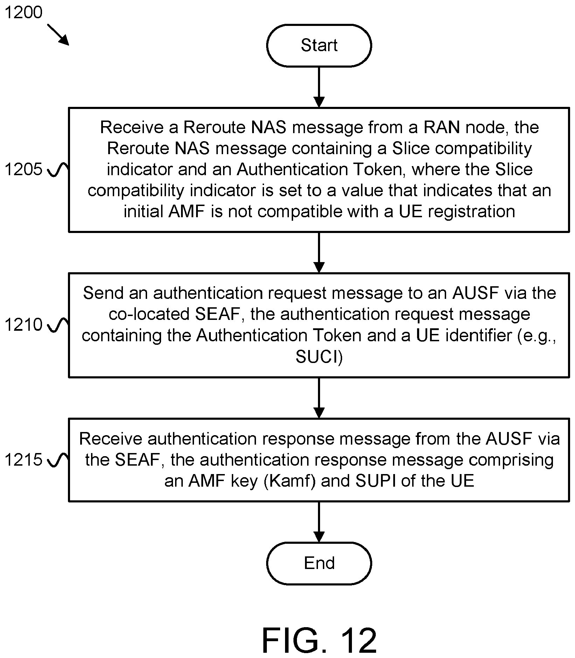

Figure 12 depicts one embodiment of a method 1200 for security context control for AMF reallocation based on a slice capability indication, according to embodiments of the disclosure. In various embodiments, the method 1200 is performed by a Target AMF co-located with a SEAF, such as the AMF 131, the Target AMF/SEAF 303, and/or the network apparatus 700, described above. In some embodiments, the method 1200 is performed by a processor, such as a microcontroller, a microprocessor, a CPU, a GPU, an auxiliary processing unit, a FPGA, or the like.

The method 1200 begins and receives 1205 a Reroute NAS message from a RAN node, the Reroute NAS message comprising a Slice compatibility indicator and an Authentication Token. Here, the Slice compatibility indicator is set to a value that indicates that an initial AMF is not compatible with a UE registration. In some embodiments, the Reroute NAS message includes a Key Set Identifier, such as ngKSI. The method 1200 includes sending 1210 an authentication request message - via the co-located SEAF - to an AUSF. Here, the second authentication message contains the Authentication Token and a UE identifier (e.g., SUCI) . In some embodiments, the authentication request message is a Key Request message that also contains the ngKSI. The method 1200 includes receiving 1215 an authentication response message from the AUSF via the SEAF. Here, the authentication response message contains an AMF key (i.e., Kamf) and a SUPI of the UE. The method 1200 ends.

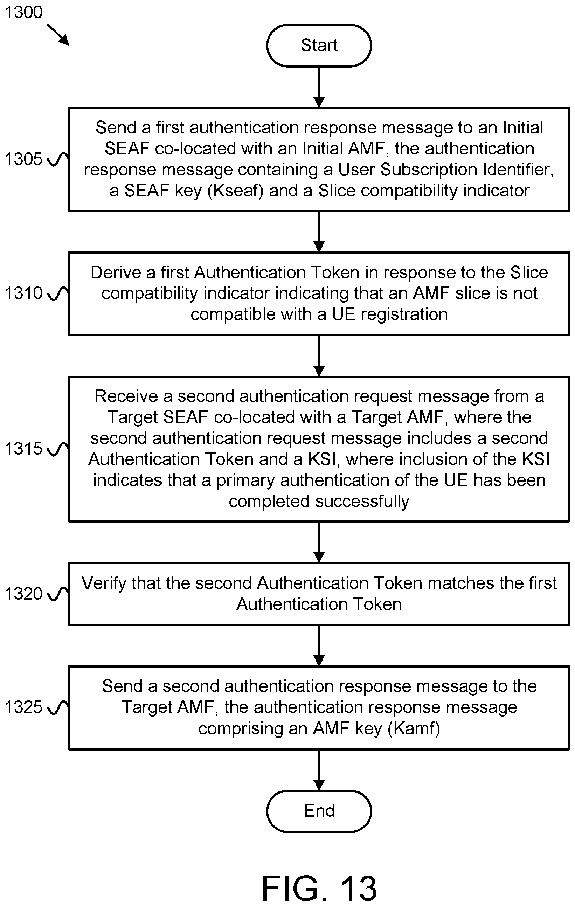

Figure 13 depicts one embodiment of a method 1300 for security context control for AMF reallocation based on a slice capability indication, according to embodiments of the disclosure. In various embodiments, the method 1300 is performed by a SEAF or SECF in a mobile communication network, such as the CSEAF 134, the CSEAF 501, and/or the network apparatus 700, described above. In some embodiments, the method 1300 is performed by a processor, such as a microcontroller, a microprocessor, a CPU, a GPU, an auxiliary processing unit, a FPGA, or the like.

The method 1300 begins and sends 1305 a first authentication response message to an Initial SEAF co-located with an Initial AMF. Here, the authentication response message contains a User Subscription Identifier (e.g., SUCI and/or SUPI), a SEAF key (i.e., Kseaf) and a Slice compatibility indicator. The method 1300 includes deriving 1310 a first Authentication Token (i.e., AMF_AUTN) in response to the Slice compatibility indicator indicating that an AMF slice is not compatible with a UE registration. The method 1300 includes receiving 1315 a second authentication request message from a Target SEAF co-located with a Target AMF. Here, the second authentication request message includes a second Authentication Token and a KSI, where inclusion of the KSI indicates that a primary authentication of the UE has been completed successfully. The method 1300 includes verifying 1320 that the second Authentication Token matches the first Authentication Token. The method 1300 includes sending 1325 a second authentication response message to the Target AMF, the authentication response message containing an AMF key (i.e., Kamf). The method 1300 ends.

Disclosed herein is a first apparatus for security context control for AMF reallocation based on a slice capability indication, according to embodiments of the disclosure. The first apparatus may be implemented by an authentication function in a mobile communication network, such as the AUSF 136, the AUSF 305, and/or the network apparatus 700, described above. The first apparatus includes a processor and a network interface that receives a first authentication request message from a SEAF that is co-located with an initial AMF. Here, the first authentication request message contains an AMF Slice Capabilities IE. Via the network interface, the processor sends a data request message to a UDM and receives a data response message from the UDM. Here, the data request message contains the received AMF Slice Capabilities IE and the data response message includes a Slice compatibility indicator.

The processor determines not to send a SEAF key to the SEAF in response to the Slice Compatibility indicator indicating that an AMF slice is not compatible with registration of a UE (e.g., having a value set to `Slice is incompatible' and/or `Incompatible Slice'). Via the network interface, the processor sends an authentication response message to the SEAF. Here, the authentication response message includes an Authentication Result, a User Subscription Identifier (e.g., SUCI and/or SUPI) and the Slice Compatibility indicator. In certain embodiments, the authentication response message includes an Authentication Token (i.e., AMF_AUTN) when the processor determines not to send the Anchor kay (i.e., Kseaf) to the SEAF co-located with the initial AMF.

In some embodiments, the processor derives an Authentication Token (i.e., AMF_AUTN) for authentication of a Target AMF in response to the Slice compatibility indicator having the value that indicates that an AMF slice is not compatible with the UE registration. In such embodiments, the authentication response message includes the Authentication Token.

In some embodiments, the data request message further contains a SUCI of the UE. In such embodiments, the data response message further contains a SUPI corresponding to the SUCI. In some embodiments, the Authentication Token is derived using a security key selected based on local policy. In such embodiments, the processor stores the derived Authentication Token, the SUCI, the received SUPI and the Slice compatibility indicator having the value indicating that an AMF slice is not compatible with the UE registration.

In some embodiments, when the processor determines to provide an SEAF key (i.e., Kseaf) to a target SEAF that is co-located with the Target AMF, then the processor derives Authentication Token using a hash function that uses as inputs: an AUSF Key (i.e., Kausf), a SUPI of the UE and a random value. In some embodiments, when the processor determines to provide a Kseaf to a target SEAF that is co-located with the Target AMF, then the processor derives Authentication Token using a hash function that uses as inputs: the Kseaf, the SUPI of the UE and a random value.

In some embodiments, the processor receives (via the network interface) a second authentication request message from a target SEAF that is co-located with the Target AMF, where the second authentication request message includes a second Authentication Token. In such embodiments, the processor verifies that the received second Authentication Token matches a locally stored Authentication Token related to a SUCI of the UE and controls the network interface to send a second authentication response message to the target SEAF in response to successful verification of the second Authentication Token. Here, the second authentication response message includes the Kseaf.

In certain embodiments, the second authentication request message includes Authentication Token and a Key Set Identifier (e.g., ngKSI) that identifies a primary UE security context. In such embodiments, the inclusion of the KSI in the second authentication request message indicates that a primary authentication of the UE has been completed successfully.

In certain embodiments, the second authentication request message contains the Authentication Token, the SUCI and the KSI. In such embodiments, the processor skips primary authentication of the UE and provides a security context (e.g., including Kseaf) to a target SEAF that is co-located with the Target AMF. In certain embodiments, the second authentication request message is received via the target SEAF that is co-located with the Target AMF. In such embodiments, the second authentication response message is sent via the target SEAF, where the second authentication response message includes the Key Set Identifier (e.g., ngKSI), the Kseaf and a SUPI of the UE.

In some embodiments, when the processor determines to provide an AMF key (i.e., Kamf) to the Target AMF, then the processor derives the Authentication Token using a hash function that uses as inputs the Kamf, the SUPI of the UE and a random value. In certain embodiments, the second authentication request message contains the Authentication Token and the SUCI. In such embodiments, the processor further initiates an exchange of authentication message (e.g., challenge request/response messaging) with the UE via the Target AMF based on the locally stored authentication data (e.g., SUCI/SUPI, AV).

In some embodiments, the first authentication request message is received from a CSEAF, and the first authentication response message is sent to the CSEAF. In such embodiments, the User Subscription Identifier in the first authentication response message includes a SUCI of the UE and a SUPI corresponding to the SUCI.

Disclosed herein is a first method for security context control for AMF reallocation based on a slice capability indication, according to embodiments of the disclosure. The first method may be performed by an authentication function in a mobile communication network, such as the AUSF 136, the AUSF 305, and/or the network apparatus 700, described above. The first method includes receiving a first authentication request message from a SEAF that is co-located with an initial AMF. Here, the first authentication request message contains an AMF Slice Capabilities IE. The first method includes sending a data request message to a UDM and receiving a data response message from the UDM. Here, the data request message contains the received AMF Slice Capabilities IE and the data response message contains a Slice compatibility indicator.

The first method includes determining not to send a SEAF key to the SEAF in response to the Slice Compatibility indicator indicating that an AMF slice is not compatible with registration of a UE (e.g., having a value set to 'Slice is incompatible' and/or 'Incompatible Slice') and sending an authentication response message to the SEAF. Here, the authentication response message includes an Authentication Result, a User Subscription Identifier (e.g., SUCI and/or SUPI), and the Slice Compatibility indicator (e.g., with value set to 'Slice is incompatible' and/or 'Incompatible Slice'). In certain embodiments, the authentication response message includes an Authentication Token (i.e., AMF_AUTN) when the AUSF determines not to send the Anchor kay (i.e., Kseaf) to the SEAF co-located with the initial AMF.

In some embodiments, the first method also includes deriving an Authentication Token (i.e., AMF_AUTN) for authentication of a Target AMF in response to the Slice compatibility indicator having the value that indicates that an AMF slice is not compatible with the UE registration. In such embodiments, the authentication response message includes the Authentication Token.

In some embodiments, the data request message further contains a SUCI of the UE. In such embodiments, the data response message further contains a SUPI corresponding to the SUCI. In some embodiments, the Authentication Token is derived using a security key selected based on local policy. In such embodiments, the first method further includes storing the derived Authentication Token, the SUCI, the received SUPI and the Slice compatibility indicator having the value indicating that an AMF slice is not compatible with the UE registration.

In some embodiments, when the AUSF determines to provide an SEAF key (i.e., Kseaf) to a target SEAF that is co-located with the Target AMF, then the Authentication Token is derived using a hash function that uses as inputs: an AUSF Key (i.e., Kausf), a SUPI of the UE and a random value. In some embodiments, when the AUSF determines to provide an Kseaf to a target SEAF that is co-located with the Target AMF, then the Authentication Token is derived using a hash function that uses as inputs: the Kseaf, the SUPI of the UE and a random value.

In some embodiments, the first method includes receiving a second authentication request message from a target SEAF that is co-located with the Target AMF, where the second authentication request message includes a second Authentication Token. In such embodiments, the first method further includes verifying that the received second Authentication Token matches a locally stored Authentication Token related to a SUCI of the UE and sending a second authentication response message to the target SEAF in response to successful verification of the second Authentication Token. Here, the second authentication response message includes the Kseaf.

In certain embodiments, the second authentication request message includes Authentication Token and a Key Set Identifier (e.g., ngKSI) that identifies a primary UE security context. In such embodiments, the inclusion of the KSI in the second authentication request message indicates that a primary authentication of the UE has been completed successfully.

In certain embodiments, the second authentication request message contains the Authentication Token, the SUCI and the KSI. In such embodiments, the first method further includes skipping primary authentication of the UE and providing a security context (e.g., including Kseaf) to a target SEAF that is co-located with the Target AMF.

In certain embodiments, the second authentication request message is received via the target SEAF that is co-located with the Target AMF. In such embodiments, the second authentication response message is sent via the target SEAF, where the second authentication response message includes the Key Set Identifier (e.g., ngKSI), the Kseaf and a SUPI of the UE.

In some embodiments, when the AUSF determines to provide an AMF key (i.e., Kamf) to the Target AMF, then the Authentication Token is derived using a hash function that uses as inputs the Kamf, the SUPI of the UE and a random value. In certain embodiments, the second authentication request message contains the Authentication Token and the SUCI. In such embodiments, the first method further includes initiating an exchange of authentication message (e.g., challenge request/response messaging) with the UE via the Target AMF based on the locally stored authentication data (e.g., SUCI/SUPI, AV).

In some embodiments, the first authentication request message is received from a CSEAF, and the first authentication response message is sent to the CSEAF. In such embodiments, the User Subscription Identifier in the first authentication response message includes a SUCI of the UE and a SUPI corresponding to the SUCI.

Disclosed herein is a second apparatus for security context control for AMF reallocation based on a slice capability indication, according to embodiments of the disclosure. The second apparatus may be implemented by an Initial AMF having a co-located SEAF, such as the AMF 131, the Initial AMF/SEAF 301, and/or the network apparatus 700, described above. The second apparatus includes a processor and a network interface that sends an authentication request message to a NF, such as the AUSF. In other embodiments, the NF may be a CSEAF, an NSSF, an NRF, or another well-connected NF. Here, the authentication request message contains an AMF Slice Capabilities IE. Via the network interface, the processor receives an authentication response message from the AUSF, the authentication response message comprising: a Slice compatibility indicator, AMF Authentication Information (e.g., an AMF Authentication Token "AMF_AUTN"), and an authentication result.

The processor determines that an AMF slice is not compatible with registration of a UE, said determination based on the received Slice compatibility indicator. The processor initiates an AMF reallocation procedure of the UE to a Target AMF in response to determining that an AMF slice is not compatible with the UE's registration. Via the network interface, the processor sends a Reroute NAS message to a RAN node (e.g., in NG-RAN). Here, the reroute NAS message comprising the Slice compatibility indication (e.g., with value set to 'Slice is incompatible' and/or 'Incompatible Slice').

In some embodiments, the authentication response message comprises an authentication token (i.e., AMF_AUTN) for authentication of the Target AMF. In such embodiments, the reroute NAS message also comprises the authentication token. In some embodiments, the Reroute NAS message further comprises a Key Set Identifier (e.g., ngKSI) that identifies a primary UE security context. In such embodiments, the inclusion of the KSI in the Reroute NAS message indicates that a primary authentication of the UE has been completed successfully.

In various embodiments, the Authentication Result received by the initial AMF contains one of the following values: 'Success,' 'Failure' and 'Paused.' In one embodiment, the initial AMF receives an Authentication Result with a value of 'Failure' or with a value of Paused' when the Slice compatibility indicator value is set to 'Slice is incompatible' and/or 'Incompatible Slice'. In another embodiment, the initial AMF receives an Authentication Result with a value of 'Success' when the Slice compatibility indicator value is set to 'Slice is compatible' and/or `Compatible Slice'.

In some embodiments, the authentication request message is sent via the co-located SEAF during an initial registration of the UE and/or during a mobility registration update of the UE. In such embodiments, the authentication response is received via the co-located SEAF.

Disclosed herein is a second method for security context control for AMF reallocation based on a slice capability indication, according to embodiments of the disclosure. The second method may be performed by an Initial AMF that is co-located with a SEAF, such as the AMF 131, the Initial AMF 301, and/or the network apparatus 700, described above. The second method includes sending an authentication request message to a network function, such as an AUSF. In other embodiments, the NF may be a CSEAF, an NSSF, an NRF, or another well-connected NF. Here, the authentication request message contains an AMF Slice Capabilities IE. The second method includes receiving an authentication response message from the NF (e.g., AUSF). Here, the authentication response message comprising: a Slice compatibility indicator, AMF Authentication Information (e.g., an AMF Authentication Token "AMF_AUTN") and an authentication result.

The second method includes determining that an AMF slice is not compatible with registration of a UE, said determination based on the received Slice compatibility indicator. The second method includes initiating an AMF reallocation procedure of the UE to a Target AMF in response to determining that an AMF slice is not compatible with the UE's registration and sending a Reroute NAS message to a RAN node (e.g., in NG-RAN). Here, the reroute NAS message comprising the Slice compatibility indication (e.g., with value set to 'Slice is incompatible' and/or 'Incompatible Slice').

In some embodiments, the authentication response message comprises an authentication token (i.e., AMF _AUTN) for authentication of the Target AMF. In such embodiments, the reroute NAS message also comprises the authentication token. In some embodiments, the Reroute NAS message further comprises a Key Set Identifier (e.g., ngKSI) that identifies a primary UE security context. In such embodiments, the inclusion of the KSI in the Reroute NAS message indicates that a primary authentication of the UE has been completed successfully.

In various embodiments, the Authentication Result received by the initial AMF contains one of the following values: 'Success,' 'Failure' and 'Paused'. In one embodiment, the initial AMF receives an Authentication Result with a value of 'Failure' or with a value of Paused' when the Slice compatibility indicator value is set to 'Slice is incompatible' and/or 'Incompatible Slice'. In another embodiment, the initial AMF receives an Authentication Result with a value of 'Success' when the Slice compatibility indicator value is set to 'Slice is compatible' and/or `Compatible Slice'.

In some embodiments, the authentication request message is sent via the co-located SEAF during an initial registration of the UE and/or during a mobility registration update of the UE. In such embodiments, the authentication response is received via the co-located SEAF.

Disclosed herein is a third apparatus for security context control for AMF reallocation based on a slice capability indication, according to embodiments of the disclosure. The third apparatus may be implemented by a data management device in a mobile communication network, such as the UDM/UDR 139, the ARPF/UDM 307, and/or the network apparatus 700, described above. The third apparatus includes a processor and a network interface that receives a first data request message from an AUSF, the first data request message comprising a User Subscription identifier (e.g., SUCI or SUPI), an AMF Slice Capabilities IE. The processor performs a Slice compatibility check based on the received AMF Slice Capabilities IE and further based on Slice Subscription Data associated with the User Subscription Identifier. Via the network interface, the processor sends a data response message to the AUSF, where the data response message contains a Slice compatibility indicator.

In some embodiments, the Slice compatibility indicator is set to a value that indicates whether an AMF slice is compatible to the serve a UE based on the available Slice Subscription Data. In certain embodiments, the Slice compatibility indicator provided by the UDM can contain a value to indicate 'Slice is compatible' and/or `Compatible Slice' when the Slice compatibility check determines that AMF slice capabilities indicted by the AMF Slice Capabilities IE satisfy a UE Slice requirement indicated by the Slice Subscription Data.

In other embodiments, the Slice compatibility indicator provided by the UDM can contain a value to indicate 'Slice is incompatible' and/or 'Incompatible Slice' when the Slice compatibility check determines that AMF slice capabilities indicted by the AMF Slice Capabilities IE do not satisfy a UE Slice requirement indicated by the Slice Subscription Data.

Disclosed herein is a third method for security context control for AMF reallocation based on a slice capability indication, according to embodiments of the disclosure. The third method may be performed by a data management device in a mobile communication network, such as the UDM/UDR 139, the ARPF/UDM 307, and/or the network apparatus 700, described above. The third method includes receiving a first data request message from an AUSF, where the first data request message contains at least a User Subscription identifier (e.g., SUCI or SUPI) and an AMF Slice Capabilities IE. The third method includes performing a Slice compatibility check based on the received AMF Slice Capabilities IE and further based on Slice Subscription Data associated with the User Subscription Identifier. The third method includes sending a data response message to the AUSF, the data response message comprising a Slice compatibility indicator.

In some embodiments, the Slice compatibility indicator is set to a value that indicates whether an AMF slice is compatible to the serve a UE based on the available Slice Subscription Data. In certain embodiments, the Slice compatibility indicator provided by the UDM contains a value to indicate 'Slice is compatible' and/or `Compatible Slice' when the Slice compatibility check determines that AMF slice capabilities indicted by the AMF Slice Capabilities IE satisfy a UE Slice requirement indicated by the Slice Subscription Data.

In other embodiments, the Slice compatibility indicator provided by the UDM contains a value to indicate 'Slice is incompatible' and/or 'Incompatible Slice' when the Slice compatibility check determines that AMF slice capabilities indicted by the AMF Slice Capabilities IE do not satisfy a UE Slice requirement indicated by the Slice Subscription Data.

Disclosed herein is a fourth apparatus for security context control for AMF reallocation based on a slice capability indication, according to embodiments of the disclosure. The fourth apparatus may be implemented by a Target AMF co-located with a SEAF, such as the AMF 131, the Target AMF/SEAF 303, and/or the network apparatus 700, described above. The fourth apparatus includes a processor that controls a network interface to receive a Reroute NAS message (e.g., containing an initial UE message or Registration Request message) from a RAN node (e.g., NG-RAN), the Reroute NAS message containing a Slice compatibility indicator and an Authentication Token (i.e., AMF_AUTN). Here, where the Slice compatibility indicator is set to a value that indicates that an initial AMF is not compatible with a UE registration.

Using the network interface, the processor sends an authentication request message to an AUSF via the co-located SEAF. Here, the second authentication message contains the Authentication Token and a SUCI of the UE. The processor receives an authentication response message from the AUSF via the SEAF. Here, the authentication response message contains an AMF key (i.e., Kamf) and a SUPI of the UE.

In some embodiments, the authentication request message further comprises a Key Set Identifier (e.g., ngKSI) that identifies a primary UE security context. In such embodiments, the inclusion of the KSI in the authentication request message indicates that a primary authentication of the UE has been completed successfully. In some embodiments, the AUSF sends the authentication response message to the co-located SEAF, said authentication response message containing a SEAF key (i.e., Kseaf). In such embodiments, the SEAF derives the Kamf using the Kseaf.

Disclosed herein is a fourth method for security context control for AMF reallocation based on a slice capability indication, according to embodiments of the disclosure. The fourth method may be performed by a Target AMF co-located with a SEAF, such as the AMF 131, the Target AMF/SEAF 303, and/or the network apparatus 700, described above. The fourth method includes receiving a Reroute NAS message (e.g., initial UE message or Registration Request message) from a RAN node (e.g., NG-RAN), where the Reroute NAS message contains a Slice compatibility indicator and an Authentication Token (i.e., AMF_AUTN). Here, the Slice compatibility indicator is set to a value that indicates that an initial AMF is not compatible with a UE registration. The fourth method includes sending an authentication request message to an AUSF via the co-located SEAF and receiving an authentication response message from the AUSF via the SEAF, where the authentication request message contains the Authentication Token and a SUCI of the UE and where the authentication response message contains an AMF key (i.e., Kamf) and a SUPI of the UE.

In some embodiments, the authentication request message further comprises a KSI (e.g., ngKSI) that identifies a primary UE security context. In such embodiments, the inclusion of the KSI in the authentication request message indicates that a primary authentication of the UE has been completed successfully. In some embodiments, the co-located SEAF receives an authentication response message from the AUSF, said authentication response message containing a SEAF key (i.e., Kseaf), wherein the SEAF derives the Kamf using the Kseaf.

Disclosed herein is a fifth apparatus for security context control for AMF reallocation based on a slice capability indication, according to embodiments of the disclosure. The fifth apparatus may be implemented by a SEAF or SEMF in a mobile communication network, such as the CSEAF 134, the CSEAF 501, and/or the network apparatus 700, described above. The fifth apparatus includes a processor and a network interface that sends a first authentication response message to an Initial SEAF co-located with an Initial AMF. Here, the authentication response message includes at least a User Subscription Identifier (e.g., SUCI and/or SUPI), a SEAF key (i.e., Kseaf) and a Slice compatibility indicator. The processor derives a first Authentication Token (i.e., AMF _AUTN) in response to the Slice compatibility indicator indicating that an AMF slice is not compatible with a UE registration. The network interface receives a second authentication request message from a Target SEAF co-located with a Target AMF. Here, the second authentication request message includes at least a second Authentication Token and a KSI, where inclusion of the KSI indicates that a primary authentication of the UE has been completed successfully. The processor verifies that the second Authentication Token matches the first Authentication Token and controls the network interface to send a second authentication response message to the Target AMF, the authentication response message containing an AMF key (i.e., Kamf).

In some embodiments, the network interface further receives a first authentication request message from the initial SEAF, the first authentication request message containing an AMF Slice Capabilities IE. Here, the network interface forwards the first authentication request message to an AUSF and receiving the first authentication response message from the AUSF in response to the first authentication request message. In such embodiments, sending the first authentication response message to the Initial AMF/SEAF includes forwarding the received first authentication response message. In further embodiments, the processor stores to local memory the Authentication Token, the User Subscription Identifier, and the Slice compatibility indicator.

In some embodiments, the Authentication Token is derived using a hash function that uses as inputs: the Kseaf, a SUPI of the UE and a random value. In some embodiments, when the processor determines to provide the Kamf to the Target AMF, then the Authentication Token is derived using a hash function that uses as inputs the Kamf, a SUPI of the UE and a random value. In some embodiments, the second authentication response message further comprises a SUPI of the UE.

Disclosed herein is a fifth method for security context control for AMF reallocation based on a slice capability indication, according to embodiments of the disclosure. The fifth method may be performed by a SEAF or SEMF in a mobile communication network, such as the CSEAF 134, the CSEAF 501 and/or the network apparatus 700, described above. The fifth method includes sending a first authentication response message to an Initial SEAF co-located with an Initial AMF. Here the authentication response message includes at least a User Subscription Identifier (e.g., SUCI and/or SUPI), a SEAF key (i.e., Kseaf) and a Slice compatibility indicator. The fifth method includes deriving a first Authentication Token (i.e., AMF _AUTN) in response to the Slice compatibility indicator indicating that an AMF slice is not compatible with a UE registration and receiving a second authentication request message from a Target SEAF co-located with a Target AMF. Here, the second authentication request message includes a second Authentication Token and a KSI, where inclusion of the KSI indicates that a primary authentication of the UE has been completed successfully. The fifth method includes verifying that the second Authentication Token matches the first Authentication Token and sending a second authentication response message to the Target AMF, the authentication response message containing an AMF key (i.e., Kamf).

In some embodiments, the fifth method includes receiving a first authentication request message from the initial SEAF, the first authentication request message containing an AMF Slice Capabilities IE. Here, the fifth method additionally includes forwarding the first authentication request message to an AUSF and receiving the first authentication response message from the AUSF in response to the first authentication request message. In such embodiments, sending the first authentication response message to the initial AMF/SEAF comprises forwarding the received first authentication response message. In further embodiments, the fifth method includes storing to local memory the Authentication Token, the User Subscription Identifier, and the Slice compatibility indicator.

In some embodiments, the Authentication Token is derived using a hash function that uses as inputs: the Kseaf, a SUPI of the UE and a random value. In certain embodiments, when the CSEAF determines to provide the Kamf to the Target AMF, then the Authentication Token is derived using a hash function that uses as inputs the Kamf, a SUPI of the UE and a random value. In some embodiments, the second authentication response message further comprises a SUPI of the UE.

Embodiments may be practiced in other specific forms. The described embodiments are to be considered in all respects only as illustrative and not restrictive. The scope of the invention is indicated by the appended claims rather than by the foregoing description.

## Claims

1. An Authentication Server Function, AUSF, (800) comprising:
a processor (805); and
a memory (810) coupled to the processor (805), the processor (805) configured to cause the AUSF (800) to:
receive (905) a first authentication request message from a Security Anchor Function, SEAF, that is co-located with an initial Access and Mobility management Function, AMF, the first authentication request message comprising an AMF Slice Capabilities Information Element, IE,;
send (910) a data request message to a Unified Data Management function, UDM, the data request message comprising the received AMF Slice Capabilities IE;
receive (915) a data response message from the UDM, wherein the data response message includes a Slice compatibility indicator;
determine (920) not to send a SEAF key to the SEAF in response to the Slice Compatibility indicator indicating that an AMF slice is not compatible with registration of a User Equipment device, UE,; and
send (925) an authentication response message to the SEAF, wherein the authentication response message includes an Authentication Result, a User Subscription Identifier, and the Slice Compatibility indicator.

2. The AUSF (800) of claim 1, wherein the processor (805) is further configured to derive an Authentication Token for authentication of a Target AMF in response to the Slice compatibility indicator having the value that indicates that an AMF slice is not compatible with the UE registration, wherein the authentication response message includes the Authentication Token.

3. The AUSF (800) of claim 2, wherein the data request message further comprises a Subscription Concealed Identifier, SUCI, of the UE, wherein the data response message further comprises a Subscription Permanent Identifier, SUPI, corresponding to the SUCI, wherein the Authentication Token is derived using a security key selected based on local policy, the method further comprising:
storing the derived Authentication Token, the SUCI, the received SUPI and the Slice compatibility indicator having the value indicating that an AMF slice is not compatible with the UE registration.

4. The AUSF (800) of claim 2, wherein the processor (805) is further arranged to determine to provide an SEAF key, Kseaf, to a target SEAF that is co-located with the Target AMF, then the Authentication Token is derived using a hash function that uses as inputs a first set of inputs or a second set of inputs, wherein the first set of inputs comprises: an AUSF Key, Kausf, a Subscription Permanent Identifier, SUPI, of the UE and a random value, wherein the second set of inputs comprises: the Kseaf, SUPI of the UE and a random value.

5. The AUSF (800) of claim 2, wherein the processor (805) is further arranged to:
receive a second authentication request message from a target SEAF that is co-located with the Target AMF, wherein the second authentication request message includes a second Authentication Token;
verify that the received second Authentication Token matches a locally stored Authentication Token related to a Subscription Concealed Identifier, SUCI, of the UE; and
send a second authentication response message to the target SEAF in response to successful verification of the second Authentication Token, wherein the second authentication response message includes a SEAF key, Kseaf,.

6. The AUSF (800) of claim 5, wherein the second authentication request message includes Authentication Token and a Key Set Identifier, KSI, that identifies a primary UE security context, wherein the inclusion of the KSI in the second authentication request message indicates that a primary authentication of the UE has been completed successfully.

7. The AUSF (800) of claim 5, wherein the second authentication request message contains the Authentication Token, the SUCI and a Key Set Identifier, KSI, the method further comprising:
skipping primary authentication of the UE; and
providing a security context to a target SEAF that is co-located with the Target AMF.

8. The AUSF (800) of claim 5, wherein the second authentication request message is received via a target SEAF that is co-located with the Target AMF, wherein the second authentication response message is sent via the target SEAF, wherein the second authentication response message includes a Key Set Identifier, KSI, the Kseaf and a Subscription Permanent Identifier, SUPI, of the UE.

9. An initial Access and Mobility management Function, AMF, (800) having a co-located Security Anchor Function, SEAF, the initial AMF (800) comprising:
a processor (805); and
a memory (810) coupled to the processor (805), the processor (805) configured to cause the AMF (800) to:
send (1005) an authentication request message to an Authentication Server Function, AUSF, the authentication request message comprising an AMF Slice Capabilities information element, IE,;
receive (1010) an authentication response message from the AUSF, the authentication response message comprising: a Slice compatibility indicator, AMF Authentication Information and authentication result;
determine (1015) that an AMF slice is not compatible with registration of a User Equipment device, UE, said determination based on the received Slice compatibility indicator;
initiate (1020) an AMF reallocation procedure of the UE to a Target AMF in response to determining that an AMF slice is not compatible with the UE's registration; and
send (1025) a Reroute NAS message to a Radio Access Network, RAN, node, the reroute NAS message comprising the Slice compatibility indicator.

10. The initial AMF (800) of claim 9, wherein the authentication response message comprises an authentication token for authentication of the Target AMF, wherein the reroute NAS message also comprises the authentication token.

11. The initial AMF (800) of claim 9, wherein the Reroute NAS message further comprises a Key Set Identifier, KSI, that identifies a primary UE security context, wherein the inclusion of the KSI in the Reroute NAS message indicates that a primary authentication of the UE has been completed successfully.

12. The initial AMF (800) of claim 9, wherein the Authentication Result received by the initial AMF contains one of the following values: 'Success,' 'Failure' and 'Paused', wherein the initial AMF receives an Authentication Result with a value of 'Failure' or with a value of Paused' when the Slice compatibility indicator value is set to 'Incompatible Slice', wherein the initial AMF receives an Authentication Result with a value of 'Success' when the Slice compatibility indicator value is set to 'Compatible Slice'.

13. A Unified Data Management function, UDM, (800), the apparatus (800) comprising:
a processor (805); and
a memory (810) coupled to the processor (805), the processor (805) configured to cause the UDM function (800) to:
receive (1105) a first data request message from an Authentication Server Function, AUSF, the first data request message comprising a User Subscription identifier, an Access and Mobility management Function, AMF, Slice Capabilities information element, IE,;
perform (1110) a Slice compatibility check based on the received AMF Slice Capabilities IE and further based on Slice Subscription Data associated with the User Subscription Identifier; and
send (1115) a data response message to the AUSF, the data response message comprising a Slice compatibility indicator.

14. The UDM function (800) of claim 13, wherein the Slice compatibility indicator is set to a value that indicates whether an AMF slice is compatible to the serve a User Equipment device, UE, based on the available Slice Subscription Data, wherein the Slice compatibility indicator provided by the UDM contains a value to indicate `Compatible Slice' when the Slice compatibility check determines that AMF slice capabilities indicted by the AMF Slice Capabilities IE satisfy a UE Slice requirement indicated by the Slice Subscription Data, wherein the Slice compatibility indicator provided by the UDM contains a value to indicate 'Incompatible Slice' when the Slice compatibility check determines that AMF slice capabilities indicted by the AMF Slice Capabilities IE do not satisfy a UE Slice requirement indicated by the Slice Subscription Data.

15. A target Access and Mobility management Function, AMF, (800) having a co-located Security Anchor Function, SEAF, the target AMF (800) comprising:
a processor (805); and
a memory (810) coupled to the processor (805), the processor (805) configured to cause the target AMF (800) to:
receive (1205) a Reroute NAS message from a RAN node, the Reroute NAS message comprising a Slice compatibility indicator and an Authentication Token, wherein the Slice compatibility indicator is set to a value that indicates that an initial AMF is not compatible with a User Equipment device, UE, registration;
send (1210) an authentication request message to an Authentication Server Function, AUSF, via the co-located SEAF, the authentication request message comprising the Authentication Token and a Subscription Concealed Identifier, SUCI,; and
receive (1215) an authentication response message from the AUSF via the SEAF, the authentication response message comprising an AMF key, Kamf, and a Subscription Permanent Identifier, SUPI, of the UE.

## Patentansprüche

1. Authentifizierungsserverfunktion (Authentication Server Function, AUSF), (800), umfassend:
einen Prozessor (805); und
einen Speicher (810), der mit dem Prozessor (805) gekoppelt ist, wobei der Prozessor (805) dazu konfiguriert ist, die AUSF (800) zu veranlassen zum:
Empfangen (905) einer ersten Authentifizierungsanforderungsnachricht von einer Sicherheitsankerfunktion (Security Anchor Function, SEAF), die mit einer anfänglichen Zugriffs- und Mobilitätsmanagementfunktion (Access and Mobility Management Function, AMF) co-lokalisiert ist, wobei die erste Authentifizierungsanforderungsnachricht ein AMF-Slice-Fähigkeiten-Informationselement (IE) umfasst;
Senden (910) einer Datenanforderungsnachricht an eine einheitliche Datenmanagement-Funktion (Unified Data Management, UDM), wobei die Datenanforderungsnachricht das Slice-Fähigkeiten-IE der empfangenen AMF umfasst;
Empfangen (915) einer Datenantwortnachricht vom UDM, wobei die Datenantwortnachricht einen Slice-Kompatibilitätsindikator beinhaltet;
Bestimmen (920), keinen SEAF-Schlüssel an die SEAF zu senden, als Reaktion darauf, dass der Slice-Kompatibilitätsindikator angibt, dass eine AMF-Slice nicht mit der Registrierung einer Benutzerausrüstungsvorrichtung (User Equipment, UE) kompatibel ist; und
Senden (925) einer Authentifizierungsantwortnachricht an die SEAF, wobei die Authentifizierungsantwortnachricht ein Authentifizierungsergebnis, eine Benutzerabonnementkennung und den Slice-Kompatibilitätsindikator einschließt.

2. AUSF (800) nach Anspruch 1, wobei der Prozessor (805) ferner konfiguriert ist, um ein Authentifizierungstoken zur Authentifizierung einer Ziel-AMF abzuleiten, und als Reaktion darauf, dass der Slice-Kompatibilitätsindikator den Wert aufweist, der angibt, dass eine AMF-Slice nicht mit der UE-Registrierung kompatibel ist, wobei die Authentifizierungsantwortnachricht das Authentifizierungstoken einschließt.

3. AUSF (800) nach Anspruch 2, wobei die Datenanforderungsnachricht ferner einen durch Abonnement verdeckten Identifikator (Subscription Concealed Identifier, SUCI) der UE umfasst, wobei die Datenantwortnachricht ferner einen dauerhaften Abonnementidentifikator (Subscription Permanent Identifier, SUPI) umfasst, der dem SUCI entspricht, wobei das Authentifizierungstoken unter Verwendung eines Sicherheitsschlüssels abgeleitet wird, der basierend auf einer lokalen Richtlinie ausgewählt wurde, wobei das Verfahren ferner umfasst:
Speichern des abgeleiteten Authentifizierungstokens, des SUCI, des empfangenen SUPI und des Slice-Kompatibilitätsindikators mit dem Wert, der angibt, dass eine AMF-Slice nicht mit der UE-Registrierung kompatibel ist.

4. AUSF (800) nach Anspruch 2, wobei der Prozessor (805) ferner dazu eingerichtet ist, zu bestimmen, dass ein SEAF-Schlüssel (Kseaf) an eine Ziel-SEAF bereitgestellt wird, die mit der Ziel-AMF co-lokalisiert ist, woraufhin das Authentifizierungstoken unter Verwendung einer Hash-Funktion abgeleitet wird, die als Eingaben einen ersten Satz von Eingaben oder einen zweiten Satz von Eingaben verwendet, wobei der erste Satz von Eingaben umfasst: einen AUSF-Schlüssel (Kausf), einen Subscription Permanent Identifier (SUPI) der UE und einen Zufallswert, wobei der zweite Satz von Eingaben umfasst: den Kseaf, den SUPI der UE und einen Zufallswert.

5. AUSF (800) nach Anspruch 2, wobei der Prozessor (805) ferner eingerichtet ist zum:
Empfangen einer zweiten Authentifizierungsanforderungsnachricht von einer Ziel-SEAF, die mit der Ziel-AMF co-lokalisiert ist, wobei die zweite Authentifizierungsanforderungsnachricht ein zweites Authentifizierungstoken einschließt;
Verifizieren, dass das empfangene zweite Authentifizierungstoken mit einem lokal gespeicherten Authentifizierungstoken übereinstimmt, das sich auf einen Subscription Concealed Identifier (SUCI) der UE bezieht, und
Senden einer zweiten Authentifizierungsantwortnachricht an die Ziel-SEAF als Reaktion auf die erfolgreiche Verifizierung des zweiten Authentifizierungstokens, wobei die zweite Authentifizierungsantwortnachricht einen SEAF-Schlüssel (Kseaf) einschließt.

6. AUSF (800) nach Anspruch 5, wobei die zweite Authentifizierungsanforderungsnachricht ein Authentifizierungstoken und einen Schlüsselsatzidentifikator (Key Set Identifier, KSI) einschließt, der einen primären UE-Sicherheitskontext identifiziert, wobei die Einbeziehung des KSI in die zweite Authentifizierungsanforderungsnachricht angibt, dass eine primäre Authentifizierung der UE erfolgreich abgeschlossen wurde.

7. AUSF (800) nach Anspruch 5, wobei die zweite Authentifizierungsanforderungsnachricht das Authentifizierungstoken, den SUCI und einen Schlüsselsatzidentifikator (Key Set Identifier, KSI) enthält, wobei das Verfahren ferner umfasst:
Überspringen der primären Authentifizierung der UE; und
Bereitstellen eines Sicherheitskontexts an eine Ziel-SEAF, die mit der Ziel-AMF co-lokalisiert ist.

8. AUSF (800) nach Anspruch 5, wobei die zweite Authentifizierungsanforderungsnachricht über eine Ziel-SEAF empfangen wird, die mit der Ziel-AMF co-lokalisiert ist, wobei die zweite Authentifizierungsantwortnachricht über die Ziel-SEAF gesendet wird, wobei die zweite Authentifizierungsantwortnachricht einen Schlüsselsatzidentifikator (Key Set Identifier, KSI), den Kseaf und einen Subscription Permanent Identifier (SUPI) der UE umfasst.

9. Anfängliche Zugriffs- und Mobilitätsmanagementfunktion (AMF) (800) mit einer co-lokalisierten Sicherheitsankerfunktion (SEAF), wobei die anfängliche AMF (800) Folgendes umfasst:
einen Prozessor (805); und
einen Speicher (810), der mit dem Prozessor (805) gekoppelt ist, wobei der Prozessor (805) dazu konfiguriert ist, die AMF (800) zu veranlassen zum:
Senden (1005) einer Authentifizierungsanforderungsnachricht an eine Authentifizierungsserverfunktion, AUSF, wobei die Authentifizierungsanforderungsnachricht ein AMF-Slice-Fähigkeiten-Informationselement, IE, umfasst;
Empfangen (1010) einer Authentifizierungsantwortnachricht von der AUSF, wobei die Authentifizierungsantwortnachricht umfasst: einen Slice-Kompatibilitätsindikator, AMF-Authentifizierungsinformationen und ein Authentifizierungsergebnis;
Bestimmen (1015), dass eine AMF-Slice nicht mit der Registrierung einer Benutzerausrüstungsvorrichtung (User Equipment Device, UE) kompatibel ist, wobei diese Bestimmung auf dem empfangenen Slice-Kompatibilitätsindikator basiert;
Initiieren (1020) einer AMF-Neuzuweisungsprozedur der UE zu einer Ziel-AMF als Reaktion auf die Feststellung, dass eine AMF-Slice nicht mit der Registrierung der UE kompatibel ist; und
Senden (1025) einer Reroute-NAS-Nachricht an einen Funkzugangsnetz-Knoten (Radio Access Network (RAN)-Knoten), wobei
die Reroute-NAS-Nachricht den Slice-Kompatibilitätsindikator umfasst.

10. Anfängliche AMF (800) nach Anspruch 9, wobei die Authentifizierungsantwortnachricht ein Authentifizierungstoken zur Authentifizierung der Ziel-AMF umfasst, wobei die Reroute-NAS-Nachricht auch das Authentifizierungstoken umfasst.

11. Anfängliche AMF (800) nach Anspruch 9, wobei die Reroute-NAS-Nachricht außerdem einen Schlüsselsatzidentifikator (Key Set Identifier, KSI) umfasst, der einen primären UE-Sicherheitskontext identifiziert, wobei die Einbeziehung des KSI in die Reroute-NAS-Nachricht angibt, dass eine primäre Authentifizierung der UE erfolgreich abgeschlossen wurde.

12. Anfängliche AMF (800) nach Anspruch 9, wobei das von der anfänglichen AMF empfangene Authentifizierungsergebnis einen der folgenden Werte enthält: "Erfolgreich", "Fehlgeschlagen" und "Angehalten", wobei die anfängliche AMF ein Authentifizierungsergebnis mit dem Wert "Fehlgeschlagen" oder mit dem Wert "Angehalten" erhält, wenn der Wert des Slice-Kompatibilitätsindikators auf "Inkompatible Slice" gesetzt ist, wobei die anfängliche AMF ein Authentifizierungsergebnis mit dem Wert "Erfolgreich" erhält, wenn der Wert des Slice-Kompatibilitätsindikators auf "Kompatible Slice" gesetzt ist.

13. Einheitliche Datenmanagement-Funktion (Unified Data Management-Funktion, UDM), (800), wobei die Einrichtung (800) umfasst:
einen Prozessor (805); und
einen Speicher (810), der mit dem Prozessor (805) gekoppelt ist, wobei der Prozessor (805) dazu konfiguriert ist, die UDM-Funktion (800) zu veranlassen zum:
Empfangen (1105) einer ersten Datenanforderungsnachricht von einer Authentifizierungsserverfunktion (AUSF), wobei die erste Datenanforderungsnachricht einen Benutzerabonnementidentifikator, ein Zugriffs- und Mobilitätsmanagementfunktion (AMF) Slice-Fähigkeiten-Informationselement (IE) umfasst;
Durchführen (1110) einer Slice-Kompatibilitätsprüfung basierend auf dem empfangenen AMF-Slice-Fähigkeiten-IE und ferner auf den Slice-Abonnementdaten, die dem Benutzerabonnementidentifikator zugeordnet sind; und
Senden (1115) einer Datenantwortnachricht an die AUSF, wobei die Datenantwortnachricht einen Slice-Kompatibilitätsindikator umfasst.

14. UDM-Funktion (800) nach Anspruch 13, wobei der Slice-Kompatibilitätsindikator auf einen Wert gesetzt wird, der angibt, ob eine AMF-Slice kompatibel ist, um eine Benutzerausrüstungsvorrichtung (UE) zu bedienen, basierend auf den verfügbaren Slice-Abonnementdaten, wobei der vom UDM bereitgestellte Slice-Kompatibilitätsindikator einen Wert enthält, der 'Kompatible Slice' angibt, wenn die Slice-Kompatibilitätsprüfung bestimmt, dass die AMF-Slice-Fähigkeiten, die durch das AMF-Slice-Fähigkeiten-IE angegeben werden, eine durch die Slice-Abonnementdaten angegebene UE-Slice-Anforderung erfüllen, wobei der vom UDM bereitgestellte Slice-Kompatibilitätsindikator einen Wert enthält, der 'Inkompatible Slice' angibt, wenn die Slice-Kompatibilitätsprüfung feststellt, dass AMF-Slice-Fähigkeiten, die durch das AMF-Slice-Fähigkeiten-IE angegeben werden, eine durch die Slice-Abonnementdaten angegebene UE-Slice-Anforderung nicht erfüllen.

15. Ziel-Zugriffs- und Mobilitätsmanagementfunktion (AMF) (800) mit einer co-lokalisierten Sicherheitsankerfunktion (SEAF), wobei die Ziel-AMF (800) umfasst:
einen Prozessor (805); und
einen Speicher (810), der mit dem Prozessor (805) gekoppelt ist, wobei der Prozessor (805) dazu konfiguriert ist, die Ziel-AMF (800) zu veranlassen zum:
Empfangen (1205) einer Reroute-NAS-Nachricht von einem RAN-Knoten, wobei die Reroute-NAS-Nachricht einen Slice-Kompatibilitätsindikator und ein Authentifizierungstoken umfasst, wobei der Slice-Kompatibilitätsindikator auf einen Wert gesetzt ist, der angibt, dass eine anfängliche AMF nicht mit einer Registrierung einer Benutzerausrüstungsvorrichtung (UE) kompatibel ist;
Senden (1210) einer Authentifizierungsanforderungsnachricht an eine Authentifizierungsserver-Funktion (AUSF) über die co-lokalisierte SEAF, wobei die Authentifizierungsanforderungsnachricht das Authentifizierungstoken und einen verdeckten Abonnementidentifikator (Subscription Concealed Identifier, SUCI) umfasst; und
Empfangen (1215) einer Authentifizierungsantwortnachricht von der AUSF über die SEAF, wobei die Authentifizierungsantwortnachricht einen AMF-Schlüssel (Kamf) und einen dauerhaften Abonnementidentifikator (Subscription Permanent Identifier, SUPI) der UE umfasst.

## Revendications

1. Fonction, AUSF, de serveur d'authentification (800), comprenant :
un processeur (805) ; et
une mémoire (810) couplée au processeur (805), le processeur (805) étant configuré pour faire en sorte que l'AUSF (800) puisse :
recevoir (905) un premier message de demande d'authentification d'une fonction d'ancrage de sécurité, SEAF, colocalisée avec une fonction initiale de gestion de l'accès et de la mobilité, AMF, le premier message de demande d'authentification comprenant un élément d'information sur les capacités de tranche, IE, de l'AMF ;
envoyer (910) un message de demande de données à une fonction de gestion unifiée des données, UDM, le message de demande de données comprenant l'IE de capacités de tranche de l'AMF reçu ;
recevoir (915) un message de réponse de données de l'UDM, dans laquelle le message de réponse de données comporte un indicateur de compatibilité de tranche ;
déterminer (920) de ne pas envoyer de clé SEAF à la SEAF en réponse à l'indicateur de compatibilité de tranche indiquant qu'une tranche AMF n'est pas compatible avec l'enregistrement d'un dispositif d'équipement d'utilisateur (UE) ; et
envoyer (925) un message de réponse d'authentification à la SEAF, dans laquelle le message de réponse d'authentification comporte un résultat d'authentification, un identifiant d'abonnement d'utilisateur et l'indicateur de compatibilité de tranche.

2. AUSF (800) selon la revendication 1, dans laquelle le processeur (805) est en outre configuré pour dériver un jeton d'authentification pour l'authentification d'un AMF cible en réponse à l'indicateur de compatibilité de tranche ayant la valeur qui indique qu'une tranche AMF n'est pas compatible avec l'enregistrement de l'UE, dans laquelle le message de réponse d'authentification comporte le jeton d'authentification.

3. AUSF (800) selon la revendication 2, dans laquelle le message de demande de données comprend en outre un identifiant caché d'abonnement, SUCI, de l'UE, dans laquelle le message de réponse aux données comprend en outre un identifiant permanent d'abonnement, SUPI, correspondant au SUCI, dans laquelle le jeton d'authentification est dérivé à l'aide d'une clé de sécurité sélectionnée sur la base d'une politique locale, le procédé comprenant en outre :
le stockage du jeton d'authentification dérivé, SUCI, du SUPI reçu et de l'indicateur de compatibilité de tranche ayant la valeur indiquant qu'une tranche AMF n'est pas compatible avec l'enregistrement de l'UE.

4. AUSF (800) selon la revendication 2, dans laquelle le processeur (805) est en outre agencé pour déterminer s'il faut fournir une clé SEAF, Kseaf, à une SEAF cible qui est colocalisée avec l'AMF cible, puis le jeton d'authentification est dérivé à l'aide d'une fonction de hachage qui utilise comme entrées un premier ensemble d'entrées ou un second ensemble d'entrées, dans laquelle le premier ensemble d'entrées comprend : une clé AUSF, Kausf, un identifiant permanent d'abonnement, SUPI, de l'UE et une valeur aléatoire, dans laquelle la seconde série d'entrées comprend : le Kseaf, le SUPI de l'UE et une valeur aléatoire.

5. AUSF (800) selon la revendication 2, dans laquelle le processeur (805) est en outre agencé pour :
recevoir un second message de demande d'authentification d'une SEAF cible qui est colocalisée avec l'AMF cible, dans laquelle le second message de demande d'authentification comporte un second jeton d'authentification ;
vérifier que le second jeton d'authentification reçu correspond à un jeton d'authentification stocké localement et lié à un identificateur caché d'abonnement (SUCI) de l'UE ; et
envoyer un second message de réponse d'authentification à la SEAF cible en réponse à la vérification réussie du second jeton d'authentification, dans laquelle le second message de réponse d'authentification comporte une clé SEAF, Kseaf.

6. AUSF (800) selon la revendication 5, dans laquelle le second message de demande d'authentification comporte un jeton d'authentification et un identificateur de jeu de clés (KSI) qui identifie un contexte de sécurité primaire de l'UE, dans laquelle l'inclusion du KSI dans le second message de demande d'authentification indique qu'une authentification primaire de l'UE a été réalisée avec succès.

7. AUSF (800) selon la revendication 5, dans laquelle le second message de demande d'authentification contient le jeton d'authentification, SUCI, et un identificateur de jeu de clés, KSI, le procédé comprenant en outre :
l'omission de l'authentification primaire de l'UE ; et
la fourniture d'un contexte de sécurité à une SEAF cible qui est colocalisée avec l'AMF cible.

8. AUSF (800) selon la revendication 5, dans laquelle le second message de demande d'authentification est reçu par l'intermédiaire d'une SEAF cible colocalisée avec l'AMF cible, dans laquelle le second message de réponse d'authentification est envoyé par l'intermédiaire de la SEAF cible, dans laquelle le second message de réponse d'authentification comporte un identifiant d'ensemble de clés, KSI, le Kseaf et un identifiant permanent d'abonnement, SUPI, de l'UE.

9. Fonction, AMF, initiale de gestion de l'accès et de la mobilité (800) ayant une fonction d'ancrage de sécurité, SEAF colocalisée, l'AMF initiale (800) comprenant :
un processeur (805) ; et
une mémoire (810) couplée au processeur (805), le processeur (805) étant configuré pour faire en sorte que l'AMF (800) puisse :
envoyer (1005) un message de demande d'authentification à une fonction de serveur d'authentification, AUSF, le message de demande d'authentification comprenant un élément d'information, IE, de capacité de tranche AMF ;
recevoir (1010) un message de réponse d'authentification de l'AUSF, le message de réponse d'authentification comprenant : un indicateur de compatibilité de tranche, des informations d'authentification AMF et un résultat d'authentification ;
déterminer (1015) qu'une tranche d'AMF n'est pas compatible avec l'enregistrement d'un dispositif d'équipement d'utilisateur, UE, cette détermination étant basée sur l'indicateur de compatibilité de tranche reçu ;
lancer (1020) une procédure de réattribution AMF de l'UE vers une AMF cible après avoir déterminé qu'une tranche AMF n'est pas compatible avec l'enregistrement de l'UE ; et
envoyer (1025) un message NAS de réacheminement à un noeud de réseau d'accès radio, RAN, le
message NAS de réacheminement comprenant l'indicateur de compatibilité des tranches.

10. AMF initiale (800) selon la revendication 9, dans laquelle le message de réponse d'authentification comprend un jeton d'authentification pour l'authentification de l'AMF cible, dans laquelle le message NAS de réacheminement comprend également le jeton d'authentification.

11. AMF initiale (800) selon la revendication 9, dans laquelle le message NAS de réacheminement comprend en outre un identificateur d'ensemble de clés (KSI) qui identifie un contexte de sécurité primaire de l'UE, dans laquelle l'inclusion du KSI dans le message NAS de réacheminement indique qu'une authentification primaire de l'UE a été réalisée avec succès.

12. AMF initiale (800) selon la revendication 9, dans laquelle le résultat d'authentification reçu par l'AMF initiale contient l'une des valeurs suivantes : "Succès", "Échec" et "Pause", dans laquelle l'AMF initiale reçoit un résultat d'authentification avec la valeur "Échec" ou "Pause" lorsque la valeur de l'indicateur de compatibilité de tranche est définie sur une tranche incompatible, dans laquelle l'AMF initiale reçoit un résultat d'authentification avec la valeur "Succès" lorsque la valeur de l'indicateur de compatibilité de tranche est définie sur une tranche compatible.

13. Fonction, UDM, de gestion unifiée des données (800), l'appareil (800) comprenant :
un processeur (805) ; et
une mémoire (810) couplée au processeur (805), le processeur (805) étant configuré pour amener la fonction (800) à :
recevoir (1105) un premier message de demande de données d'une fonction de serveur d'authentification (AUSF), le premier message de demande de données comprenant un identifiant d'abonnement d'utilisateur, une fonction de gestion de l'accès et de la mobilité (AMF), un élément d'information de capacité de tranche (IE) ;
effectuer (1110) un contrôle de compatibilité de tranche sur la base de l'IE de capacités de tranche AMF reçu et, en outre, sur la base des données d'abonnement de tranche associées à l'identificateur d'abonnement d'utilisateur ; et
envoyer (1115) un message de réponse de données à l'AUSF, le message de réponse de données comprenant un indicateur de compatibilité de tranche.

14. Fonction UDM (800) selon la revendication 13, dans laquelle l'indicateur de compatibilité de tranche est défini sur une valeur qui indique si une tranche AMF est compatible pour servir un dispositif d'équipement d'utilisateur, UE, sur la base des données d'abonnement de tranche disponibles, dans laquelle l'indicateur de compatibilité de tranche fourni par l'UDM contient une valeur pour indiquer une tranche compatible lorsque le contrôle de compatibilité de tranche détermine que les capacités de tranche AMF indiquées par l'IE de capacités de tranche de l'AMF satisfont une exigence de tranche UE indiquée par les données d'abonnement de tranche, dans laquelle l'indicateur de compatibilité de tranche fourni par l'UDM contient une valeur indiquant une tranche incompatible lorsque le contrôle de compatibilité de tranche détermine que les capacités de tranche AMF indiquées par l'IE de capacités de tranche AMF ne satisfont pas à une exigence de tranche d'UE indiquée par les données d'abonnement de tranche.

15. Fonction de gestion de l'accès et de la mobilité, AMF, cible (800) ayant une fonction d'ancrage de sécurité, SEAF, colocalisée, l'AMF cible (800) comprenant :
un processeur (805) ; et
une mémoire (810) couplée au processeur (805), le processeur (805) étant configuré pour amener l'AMF cible (800) à :
recevoir (1205) un message de réacheminement NAS d'un noeud RAN, le message de réacheminement NAS comprenant un indicateur de compatibilité de tranche et un jeton d'authentification, dans laquelle l'indicateur de compatibilité de tranche est défini sur une valeur indiquant qu'une AMF initiale n'est pas compatible avec l'enregistrement d'un dispositif d'équipement d'utilisateur, UE ;
envoyer (1210) un message de demande d'authentification à une fonction de serveur d'authentification, AUSF, par l'intermédiaire de la SEAF colocalisée, le message de demande d'authentification comprenant le jeton d'authentification et un identificateur d'abonnement caché, SUCI ; et
recevoir (1215) un message de réponse d'authentification de l'AUSF par l'intermédiaire de la SEAF, le message de réponse d'authentification comprenant une clé AMF, Kamf, et un identifiant permanent d'abonnement, SUPI, de l'UE.
